(19) **Europäisches Patentamt / European Patent Office / Office européen des brevets**

(11) **EP 1 903 682 B1**

(12) **EUROPEAN PATENT SPECIFICATION**

(45) Date of publication and mention
of the grant of the patent:
**19.08.2009 Bulletin 2009/34**

(51) Int Cl.:
*H03M 1/12* (2006.01)  *G01S 7/02* (2006.01)
*G01S 7/35* (2006.01)

(21) Application number: **06254854.0**

(22) Date of filing: **19.09.2006**

(54) **Detection of a non-uniformly sampled sinusoidal signal and a Doppler sensor utilizing the same**

Detektion eines nicht-gleichförmig abgetasteten sinusförmigen Signals und entsprechender Dopplersensor

Détection d'un signal sinusoïdal échantillonné irrégulièrement et capteur Doppler l'utilisant

(84) Designated Contracting States:
**DE FR GB**

(43) Date of publication of application:
**26.03.2008 Bulletin 2008/13**

(73) Proprietors:
- **Mitsubishi Electric Information Technology Centre Europe B.V. Guildford GU2 7YD (GB)**
Designated Contracting States:
**GB**
- **MITSUBISHI DENKI KABUSHIKI KAISHA Chiyoda-ku, Tokyo 100-8310 (JP)**
Designated Contracting States:
**DE FR**

(72) Inventor: **Szajnowski, Wieslaw Jerzy Guildford, Surrey GU1 2AR (GB)**

(74) Representative: **Burke, Steven David et al R.G.C. Jenkins & Co. 26 Caxton Street London SW1H 0RH (GB)**

(56) References cited:
**EP-A- 1 528 408**  **WO-A-00/39643**

- **ZOLTOWSKI M: "Some advances and refinements in digital phase-locked loops (DPLLs)" SIGNAL PROCESSING, AMSTERDAM, NL, vol. 81, no. 4, April 2001 (2001-04), pages 735-789, XP004234875 ISSN: 0165-1684**

**Description**

BACKGROUND OF THE INVENTION

Field of the invention

This invention relates to a method employing non-uniform sampling to detect the presence of a sinusoidal signal with unknown frequency, phase and amplitude in noise and background clutter, the method being especially, but not exclusively, applicable to a sensor (e.g. a microwave sensor) utilizing a coherent pulsed electromagnetic transmission to determine both the range and Doppler frequency of an object of interest.

Description of the Prior Art

In many practical applications, there is a need to detect the presence of a sinusoidal signal with unknown frequency, phase and amplitude in background noise and clutter. Often, such detection is to be based on signal samples acquired at non-uniformly spaced time instants; additionally, the utilized average sampling rate may be substantially less than the Nyquist rate stipulated by sampling theorem. In such cases, conventional methods of frequency analysis will fail to provide reliable and statistically meaningful results.

As will be explained in more detail below, detecting a sampled sinewave is required in a microwave Doppler sensor employing short coherent electromagnetic pulses to illuminate some region of interest in order to make a decision regarding the presence or absence of an object at a predetermined range R and moving with a preselected radial velocity V. The unknown range R is calculated from the time delay $\tau$ between transmitted and reflected pulses, where $R = c\tau/2$, and c is the speed of light. The radial velocity V is determined from a Doppler shift $f_D = 2V/\lambda_0$ between the frequencies of transmitted and reflected electromagnetic waves, where $\lambda_0$ is the wavelength of transmission.

In ranging applications, the pulse repetition interval $T_0$ is so selected as to provide a required unambiguous range $R_0 = cT_0/2$, whereas the potential range resolution $c\Delta_0/2$ is determined by the duration $\Delta_0$ of transmitted pulses. If frequency analysis is performed in an observation interval of duration $T_F$, then the frequency resolution is approximately equal to $1/T_F$.

By suitably varying the values of both the hypothesized range R and the velocity V, a region of interest in the delay/Doppler (i.e., range/velocity) plane will be scanned and tested for the potential presence of various objects that might appear in the field of view of the microwave sensor. The detection procedure involved usually comprises: first, determining the distribution of reflected energy in the delay/Doppler plane and, second, utilizing a suitably chosen decision threshold to find the delay/Doppler frequency coordinates, $\tau$ and $f_D$ (or equivalently, R and V), of those points at which this threshold has been exceeded.

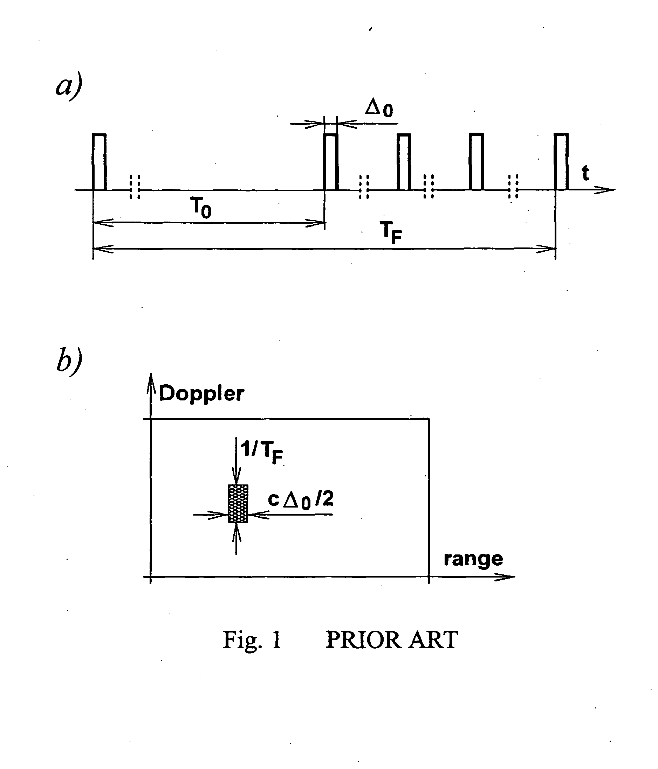

Fig. 1 depicts schematically a relationship between the parameters of a pulse train and the potential resolution in range and Doppler frequency (velocity) achievable by a microwave Doppler sensor utilizing such a pulse train for ranging purposes.

It follows from sampling theorem that in order to determine the value of Doppler frequency from discrete-time uniform samples, at least two samples per each cycle of unknown frequency will be required. Therefore, when a periodic pulse train is employed for determining both the range R and the velocity V of an object of interest, the product of the *maximum unambiguous range* $R_0$ and the *maximum unambiguous radial velocity* $V_{max}$ is bounded as follows

$$R_0 |V_{max}| \leq c\lambda_0/8$$

As seen, the bound on the product $R_0|V_{max}|$ is proportional to the wavelength $\lambda_0$ of a transmitted electromagnetic wave; hence, the use of longer wavelengths may appear to be preferable. However, because of space constraints and also other mechanical considerations, many practical systems require small antenna sizes, yet narrow beams; this would imply the use of millimetre wavelengths, preferably, those corresponding to the atmospheric transmission windows at 35, 94, 140 and 240 GHz.

In order to fully appreciate the consequences of the above fundamental limitation, consider a 94-GHz microwave Doppler sensor with $\lambda_0 \approx 3.2$ mm. For example, in the case of Doppler imaging of tornadoes, expected wind velocities may exceed 75 m/s; hence the maximum unambiguous range will be limited to 1600 m. In homeland security applications, various projectiles travelling with velocities ranging from 200 m/s to 1500 m/s should be detectable at relatively long ranges. However, even for a velocity of only 200 m/s, the maximum unambiguous range will not exceed 600 m.

Two basic prior-art techniques can be used for the construction of composite pulse trains capable of mitigating the range and velocity ambiguities:

- several pulse trains, each with *different* and suitably chosen pulse repetition intervals, can be combined (e.g., via interleaving) to form a composite pulse train with non-uniform interpulse intervals;

- within each pulse repetition interval $T_0$, a single pulse occurring in an underlying pulse train can be replaced by a packet of suitably staggered (i.e., unequally spaced) pulses, thus effectively reducing the average interpulse interval.

Both the methods will produce a composite pulse train comprising pulses with non-uniform interpulse intervals. However, in order to preserve the same unambiguous range, the autocorrelation function of the resulting composite pulse train should exhibit relatively low sidelobe values between its peaks. Alternately, a suitable range-velocity ambiguity resolving algorithm, such as one of those based on the Chinese Remainder Theorem or data clustering, may be utilized. However, irrespective of the form of a composite pulse train used for ranging, the value of unknown Doppler frequency will have to be determined from samples taken at non-uniform time instants corresponding to those at which ranging pulses are transmitted.

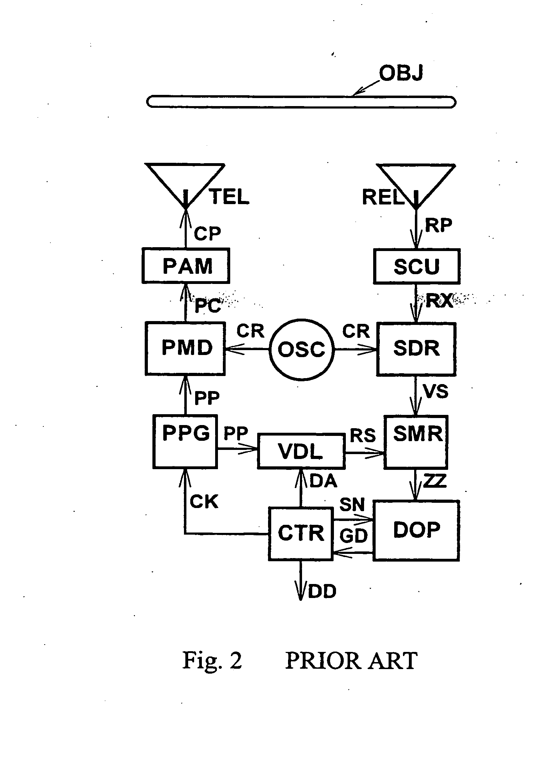

Fig. 2 is a simplified block diagram of a microwave Doppler sensor utilizing short coherent pulses of electromagnetic energy. The sensor comprises a pulse-pattern generator PPG that produces repetitively pulses PP suitably staggered in time according to a predetermined primary sequence, in response to clock pulses CK supplied by a control unit CTR. The sensor also incorporates a coherent stable oscillator OSC that generates a coherent sinusoidal signal CR with required carrier frequency, a pulse modulator PMD that modulates the low-level carrier signal CR in an on-off fashion, a power amplifier PAM that amplifies the pulsed carrier signal PC to a required level, a transmit element TEL that radiates pulses CP of electromagnetic energy towards a moving object of interest OBJ, a suitable receive element REL that receives electromagnetic pulses RP reflected back by the object OBJ, a signal conditioning unit SCU that pre-processes the signal RP obtained from the receive element REL, a synchronous (homodyne) detector SDR supplying a bipolar baseband signal VS to a sampler SMR, a variable-delay line VDL and a Doppler processor DOP.

Electromagnetic pulses RP reflected from a distant moving object OBJ and captured by the receive element REL are time-delayed and Doppler-shifted replicas of coherent pulses CP transmitted towards that object. The synchronous detector SDR processes jointly, in a coherent manner, the pre-processed received pulses RX and a reference sinusoidal carrier CR supplied by the oscillator OSC. The resulting baseband signal VS obtained at the output of the detector SDR comprises bipolar pulses, amplitude-modulated by the unknown Doppler frequency.

The pulses VS are sampled ('gated') in the sampler SMR at the time instants determined by reference pulses RS from the delay line VDL. The reference pulses RS constitute a delayed replica of the transmitted pulses PP, the delay amount DA being set by the control unit CTR. If the delay DA used to form the time-delayed replica RS matches the round-trip time delay experienced by the transmitted pulse train, the received pulses VS produced by the synchronous detector SDR will be passed intact to the Doppler processor DOP for subsequent frequency analysis. For its proper operation, the Doppler processor will also have received synchronizing pulses SN from the control unit CTR. The synchronizing pulses SN are suitably derived from clock pulses CK supplied to the pulse pattern generator PPG by the control unit CTR. The synchronising pulses determine the duration of the time interval $T_F$ used for Doppler analysis.

As indicated above, pulses PP supplied by the pulse-pattern generator PPG are delayed in the variable-delay line VDL by an amount DA set by the control unit CTR, each selected delay value corresponding to a distinct range cell at which a hypothetical object is being detected. Within a specified time interval $T_F$, the Doppler processor DOP performs on input video pulses ZZ some form of spectral analysis (at each test frequency of interest) to decide whether the received signal has originated from the object or merely has been generated by noise and interference alone.

When an object has been detected at one of the test frequencies in a range cell under examination, the Doppler processor will pass this 'global' decision GD on to the control unit CTR. A final detection decision DD, available at the output of the control unit CTR, is of the form of a list (or a 'map') indicating the range cells in which objects have been detected together with the estimated values of Doppler frequency associated with each of the detected objects.

It should be pointed out that in practical applications, noise may be accompanied by some type of background interference, such as reflections from stationary clutter, that will manifest its presence by producing a constant, or slowly-varying in time, return signal of a significant level.

In a microwave Doppler sensor, all range cells and all Doppler frequencies of interest can be tested sequentially by setting different delay values DA of the delay line VDL, and scanning, for each set delay, the entire range of expected Doppler frequencies. Alternately, all ranges and frequencies can be examined in a parallel fashion by utilizing a plurality of (fixed) delay lines and a plurality of Doppler processors.

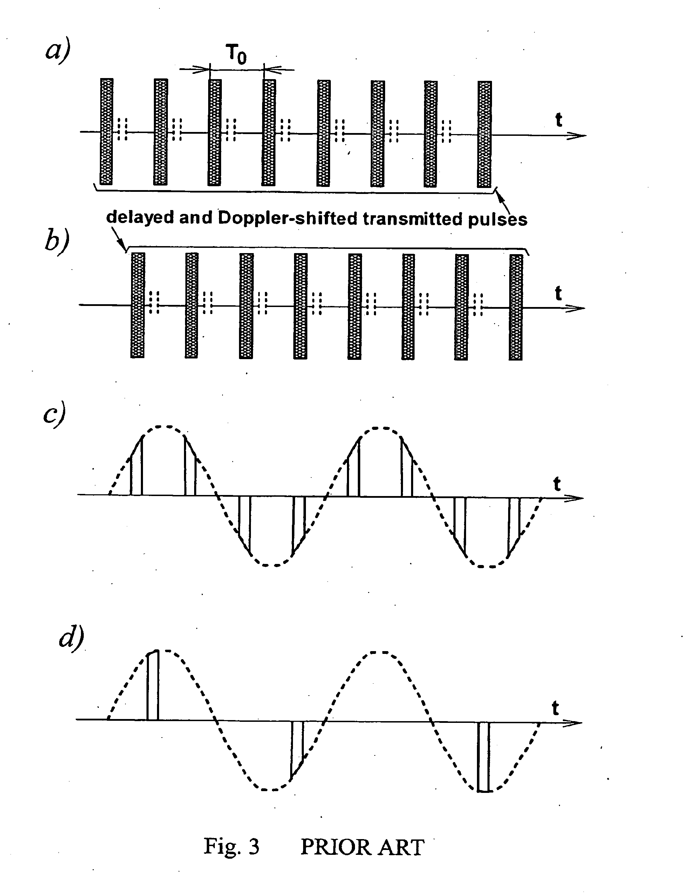

For illustrative purposes, examples are shown of a transmitted pulse train (Fig. 3a) which comprises non-uniformly spaced pulses, the pulse train as reflected by a moving object (Fig. 3b) and a baseband signal comprising pulses amplitude-modulated by a Doppler frequency (Fig. 3c). Fig. 3d depicts the case of *sub-Nyquist* non-uniform sampling when the number of processed samples is less than the number of half-cycles of a Doppler frequency being determined.

When a received signal comprises staggered pulses, discrete-time samples supplied to the Doppler processor DOP occur at time instants $t_k$, k = 1, 2, ... , K, with non-uniform intervals. Consequently, in contrast to a conventional Fourier analysis based on uniform sampling, the discrete-time sine and cosine functions

$$\{ \sin (2\pi f_x t_k) , \; \cos ( 2\pi f_x t_k) \; ; \; k = 1,2,...,K \}$$

used for spectral analysis at each test frequency $f_x$, will no longer be orthogonal. Therefore, if conventional spectral analysis is employed to process non-uniformly sampled signals, the performance of such analysis will be degraded, and the results obtained unreliable.

There exists a prior-art method of spectral analysis, known as the *Lomb normalized periodogram,* in which the orthogonality of non-uniformly sampled sines and cosines is restored by introducing, at each test frequency $f_x$, a time delay $g_x$ so selected as to satisfy the condition

$$\sum_{k=1}^{K} \sin \left[ 2\pi f_x (t_k - g_x )\right] \cos \left[ 2\pi f_x (t_k - g_x )\right] = 0 \qquad (1)$$

(see for example: W. H. Press, S. A. Teukolsky, W. T. Vetterling and B. P. Flannery: Numerical Recipes in C. Cambridge University Press, 1992. pp. 575-584).

However, the above Lomb periodogram method would not be capable of dealing in a statistically meaningful manner with a constant offset in the sample values. This is regarded as a serious drawback of the method, because in some intended applications, a constant (or slowly-varying) offset will always be introduced by reflections of transmitted pulses from stationary clutter. This problem would be particularly severe in a Doppler sensor intended to detect small moving objects in a heavy clutter environment.

There is also another prior-art technique of spectral analysis, in which an attempt has been made to correct the bias introduced by a constant offset (see: R. I. Shrager: On a three-term variant of Lomb periodogram. Astrophysics and Space Science, 277, 2001. pp. 519-530). While this technique also employs a time delay $g_x$ at each test frequency $f_x$, a constant term is also included in the fitting model. However, despite the modifications made, this technique is also not well suited to *detecting* a non-uniformly sampled sinusoidal signal in a mixture of noise and stationary clutter.

It would therefore be desirable to provide an improved method utilizing samples acquired in a non-uniform fashion to detect, at any frequency of interest, the presence of a sinusoidal signal with unknown frequency, phase and amplitude in a mixture of noise and background clutter.

It would also be desirable to combine an improved detection method with the construction of a composite pulse train capable of providing a non-redundant and efficient sub-Nyquist sampling to mitigate the combined effects of range and velocity ambiguities.

It would further be desirable to provide an improved Doppler processor to be incorporated into a microwave sensor utilizing a coherent pulsed transmission to determine both the range and Doppler frequency of an object of interest.

## SUMMARY OF THF INVENTION

Aspects of the present invention are set out in the accompanying claims.

The invention will be described below in the context of a Doppler processor and a Doppler sensor including such a processor for sensing different Doppler frequencies resulting from objects moving at multiple ranges. However, the invention is useful more broadly in other contexts, e.g. for sensing at least one Doppler frequency from an object in at least one range cell, or indeed for processing any signal to detect any sinusoidal component thereof

In a preferred embodiment of the invention, samples are analysed to determine the presence of a sinusoidal signal of frequency $f_x$, the samples preferably being in the form of a pulse train. This pulse train may be the reflection from a moving object of a pulse train transmitted by a Doppler sensor. The timings of the samples are selected, in relation to the frequency $f_x$, so that the averages of samples with such timings of sine and cosine waves of that frequency $f_x$ would be low, and preferably substantially zero. It is found that by choosing the timings in this manner, the effects of constant and slowly varying offsets, such as those resulting from stationary clutter, are suppressed.

Various techniques, including one or more of the following, could be used to achieve appropriate timings of the samples:

(a) construction of a specific sample train with reference to the frequency $f_x$ so that the samples have the required timings;

(b) construction of a cyclic sample train (with non-uniformly spaced samples in each cycle) which can, with proper selection of the starting sample, meet the required condition for one or more frequencies;

(c) selection of the frequency $f_x$ so that, for a given sample train, the required condition is met; and

(d) selective discarding of existing samples until the required condition is met (for example shifting or lengthening an observation interval to obtain the required condition, and/or discarding intervening samples so that the required condition is met using non-consecutive samples).

Thus there may be a primary sequence of samples, and samples with the required timings may be derived from this sequence either by using all the samples in the sequence or by selecting particular (consecutive or non-consecutive) samples from the sequence.

In certain circumstances it may be impractical or indeed impossible to reduce the averages of the sine and cosine waves at the nominal frequency to zero. In these circumstances, the magnitude of each average should preferable be lower than a predetermined threshold, and/or the start and end of an observation interval should be selected to minimise the magnitudes of these averages.

The pulse train may be a composite train formed of a predetermined number K of identical periodic pulse trains, each with the same pulse repetition interval $T_0$, which are suitably interleaved to form a composite periodic pulse signal s(t). While each of the underlying pulse trains comprises a single pulse per period $T_0$, each period $T_0$ of the resulting periodic pulse signal s(t) will comprise K pulses, staggered in time.

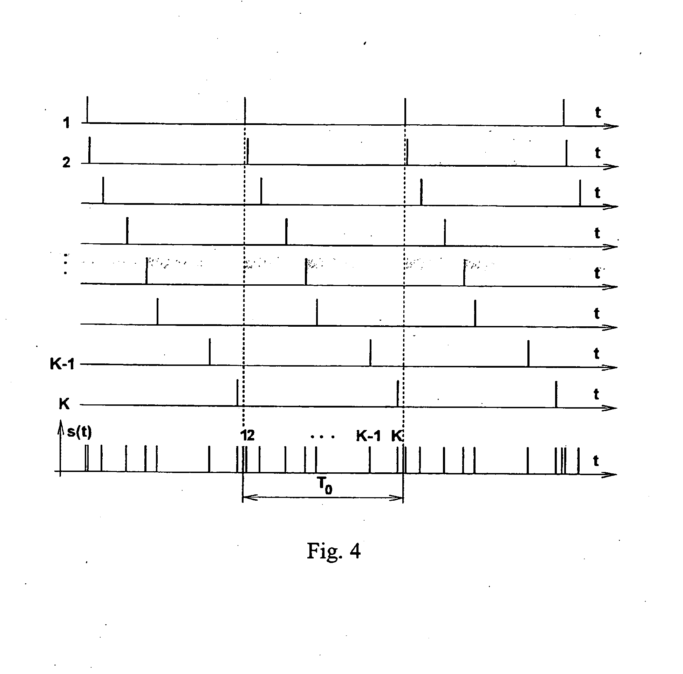

For the purpose of illustration, Fig. 4 depicts symbolically the method of interleaving in a non-uniform manner a number K of identical pulse trains and a resulting periodic (cyclic) pulse train s(t) comprising K staggered pulses per period $T_0$ at timings $t_k$, k = 1,2,..., K. (It is assumed here that each cycle of the pulse train contains C pulses, and that the same number K = C of pulses are used for determining the presence of a sinusoidal signal. However, there may in some circumstances be a benefit in using more of the pulses, such that $C \leq K \leq 2C$.)

In an alternative arrangement, the samples may be selected, during an observation interval $T_0$, from randomly-spaced samples.

Thus, a signal processor, for example a Doppler processor, receives, within a period of duration $T_0$, K samples $z(t_k)$, k = 1, 2, ... , K, comprising either: noise and stationary clutter (if there is no moving object), or alternatively, noise and stationary clutter plus a signal reflected by a moving object.

In accordance with the preferred embodiment of the present invention, for each range cell, the received samples $z(t_k)$ are processed in two parallel channels, denoted symbolically by I and Q. The operations, which are preferably performed on samples $z(t_k)$ in two stages, are:

1. weighted integration;
2. construction of a detection statistic followed by a decision-making process.

*Weighted integration*

Received samples $z(t_k)$ are first processed in the two channels to produce respective weighted sums, $I_x$ and $Q_x$, as follows

$$I_x \triangleq \sum_{k=1}^{K} c_{xk}\, z(t_k) \; ; \qquad Q_x \triangleq \sum_{k=1}^{K} s_{xk}\, z(t_k) \qquad (2)$$

where the coefficients $c_{xk}$ and $s_{xk}$ are determined from

$$c_{xk} = \cos(2\pi f_x t_k - \phi_x) \; ; \quad s_{xk} = \sin(2\pi f_x t_k - \phi_x) \qquad (3)$$

where $\phi_x$ is a phase angle, which may be selected to obtain the advantages described above in relation to the Lomb periodogram.

In contrast to prior-art techniques of spectral analysis with irregular samples, such as the Lomb periodogram, which for any selected test frequency $f_x$ optimise only a single parameter (time delay), the present invention utilizes additionally the pulse timings to obtain *independently* an additional advantage. While the sample timings are so selected as to make the discrete-time sine and cosine functions appearing in (3) 'almost orthogonal' to a constant function $h(t_k)$ $\equiv 1$, i.e. each of the following expressions is significantly smaller than 1:

$$(1/\mathbf{K})\left|\sum_{k=1}^{K}\cos\left(2\pi\,f_x\,t_k\,-\,\phi_x\right)\right| \quad;\quad (1/\mathbf{K})\left|\sum_{k=1}^{K}\sin\left(2\pi\,f_x\,t_k\,-\,\phi_x\right)\right|$$

a suitable adjustment of the phase angle $\phi_x$ makes those two functions at least substantially orthogonal to each other, i.e.

$$(1/\mathbf{K})\left|\sum_{k=1}^{K}\cos\left(2\pi\,f_x\,t_k\,-\,\phi_x\right)\sin\left(2\pi\,f_x\,t_k\,-\,\phi_x\right)\right|$$

is also significantly smaller than 1. As will be explained in the following, such a procedure results in a convenient form of a detection statistic, while providing a significant suppression of stationary clutter.

The preceding description assumes only a single frequency $f_x$ is of interest. More generally, multiple frequencies $f_x$ are of interest. Detection of different frequencies may involve using samples at different timings $t_k$. Accordingly, where the context makes it appropriate, the timings of samples used for detecting the different frequencies will be referred to below as $t_{xk}$. (It should also be noted that detection of different frequencies may involve using different numbers K of samples.)

The following description outlines possible ways of obtaining the sample timings and the phase angles $\phi_x$ for the respective frequencies.

By using a transmitted composite pulse train which is periodic with period $T_0$, it is always possible to shift an observation interval of duration $T_0$ in such a way that the interval will start at any selected pulse. Consequently, although it would be possible in accordance with the invention to select freely values for the sample timings, in a preferred embodiment different sample timings (for use in detecting different frequencies $f_x$) are obtained by starting the observation interval at different times, thus obtaining different starting pulses. Thus, the starting pulse is set at any one of K values corresponding to the different pulses. Hence, the pulse timings $t_{xk}$ for detecting a frequency $f_x$ are given by

$$t_{xk} = t_k - \mu_x$$

where $\mu_x$ is the amount by which the observation interval is shifted relative to the beginning of the basic pulse train in order to set the selected pulse as the starting pulse. (Thus, the first pulse in the shifted observation interval with be the first pulse which, in the basic pulse train, occurs after the time $\mu_x$.)

Each specific time shift $\mu_x$ will result in a different pattern, because the pattern will start with a different pulse. These different patterns are referred to herein as "circularly shifted patterns", or simply "shifted patterns". It is convenient to label each of the K shifted patterns with an index $\kappa$ equal to the number (within the original sequence) of the pulse starting the observation interval, hence

$$\kappa \in \{1, 2, ..., K\}$$

The above arrangement involves using the same number K of samples for each frequency $f_x$ of interest, the number of samples equalling the number of samples in each period of the pulse train. However, neither of these conditions is essential.

In the preferred embodiment, at each predetermined test frequency $f_x$ of interest, the optimum timings of the pulses are so chosen as to minimize *clutter leakage* $L_{x0}$ defined by

$$L_{x0} \;\triangleq\; \sqrt{\left(\sum_{k=1}^{K} c_{xk}\right)^2 + \left(\sum_{k=1}^{K} s_{xk}\right)^2} \qquad (4)$$

where the coefficients $c_{xk}$ and $s_{xk}$ are given by (3).

Expression (3) can be re-written, taking into consideration the use of different pulse timings for different fre-

quencies, as

$$c_{xk} = \cos\left(2\pi f_x t_{xk} - \phi_x\right) ; \quad s_{xk} = \sin\left(2\pi f_x t_{xk} - \phi_x\right) \quad (5)$$

or, in the context of the "shifted pattern" arrangement described above,

$$c_{xk} = \cos\left[2\pi f_x (t_k - \mu_x) - \phi_x\right] ; \quad s_{xk} = \sin\left[2\pi f_x (t_k - \mu_x) - \phi_x\right]$$

and $\mu_x$ corresponds to a value selected so that, of the K possible pulses which can form the starting pulse, the one which gives the lowest value of $L_{x0}$ for the frequency $f_x$ of interest is chosen.

In an alternative arrangement involving transmission of pulses at random timings and dynamic selection of samples, the value $L_{x0}$ is calculated as each sample is received during an observation interval $T_0$. When $L_{x0}$ has fallen below a predetermined threshold, and preferably after $T_0$ has exceeded a predetermined minimum length, the observation interval is terminated. This arrangement can be modified by (a) discarding samples at the beginning of the observation interval as new samples are received, so that the observation interval maintains substantially the same length; and/or (b) discarding samples within the observation interval and thus using non-consecutive samples in a selective manner so as to reduce the clutter leakage more rapidly.

In order to show that the value of clutter leakage $L_{x0}$ defined by (4) does not depend on the phase angle $\phi_x$ in (5), it is convenient to express (4) in an equivalent complex form as follows

$$L_{x0} = \left| \sum_{k=1}^{K} \exp\left[ j \left(2\pi f_x t_{xk} - \phi_x\right)\right] \right|$$

hence

$$L_{x0} = \left| \exp\left(-j \phi_x\right)\right| \left| \sum_{k=1}^{K} \exp\left(j\, 2\pi f_x t_{xk}\right) \right|$$

However,

$$\left| \exp\left(-j \phi_x\right)\right| = \left| \cos\left(\phi_x\right) - j\sin\left(\phi_x\right) \right| = \sqrt{\cos^2\left(\phi_x\right) + \sin^2\left(\phi_x\right)} = 1$$

so

$$L_{x0} = \left| \sum_{k=1}^{K} \exp\left(j\, 2\pi f_x t_{xk}\right) \right|$$

Accordingly, in the optimisation procedure for determining the timings $t_{xk}$, the value of $\phi_x$ in (4) may be set to any value, e.g., zero. The clutter leakage amplitude can thus be expressed in terms of samples, at timings $t_{xk}$, of sine and cosine waves of frequency $f_x$:

$$\sqrt{\left( \sum_{k=1}^{K} \cos\left(2\pi f_x t_{xk}\right)\right)^2 + \left( \sum_{k=1}^{K} \sin\left(2\pi f_x t_{xk}\right)\right)^2}$$

Ideally, therefore, the pulse timings are selected so that this expression is substantially equal to zero (which in effect means it has a magnitude significantly smaller than K). In practice, even if it is not possible or practical to obtain a zero value for this expression, the skilled man would have no difficulty in determining an acceptable maximum magnitude having regard to the particular requirements and operating conditions under consideration. There may be for example be constraints on the pulse timings if it is desired to use the preferred arrangement described above in which the timings are obtained by applying a circular shift $\mu_x$ to a predetermined pulse sequence. In this case $\mu_x$ is simply selected as a value which gives the lowest value for the clutter leakage.

Generally, it is desirable for the magnitudes $m_c$, $m_s$ of the averages of said cosine and sine waves to be no greater than 0.1 (or more preferably 0.05) times the respective amplitudes of said cosine and sine waves. Thus:

$$m_c = \left| (1/K) \sum_{k=1}^{K} \cos\left(2\pi f_x t_{xk}\right) \right| \leq 0.1 \quad ; \quad m_s = \left| (1/K) \sum_{k=1}^{K} \sin\left(2\pi f_x t_{xk}\right) \right| \leq 0.1$$

Preferably, the sum $(m_c{}^2 + m_s{}^2)$ of the squared magnitudes $m_c$, $m_s$ of the averages is less than or equal to 0.01 (or more preferably 0.0025). Additionally, or alternatively, the pulse timings are selected from a given primary sequence in such a way as to minimize the sum of the squared magnitudes $m_c$, $m_s$.

When the optimised timings are used, the discrete-time sine and cosine functions appearing in (5) will become 'almost orthogonal' to a constant function $h(t_k) \equiv 1$. This allows for effective suppression of a constant offset due to stationary clutter.

In accordance with another preferred feature of the invention, a further reduction of clutter leakage $L_{x0}$ is achieved by appropriate selection of the test frequency $f_x$. That is, instead of selecting test frequencies which are (for example) regularly spaced, test frequencies which are slightly shifted from their nominal values are selected so that lower values of $L_{x0}$ can be obtained. If the introduced frequency offset $|\delta f_x|$ is smaller than $1/T_0$, where $T_0$ is the time interval used for signal processing, then the results obtained for the shifted test frequency can, with negligible error, be assumed to be correct for the nominal test frequency.

When both the sample timings $t_{xk}$ and the test frequency $f_x$ have been determined, the phase angle $\phi_x$ of the discrete-time sine and cosine functions can be chosen so as to make the two functions orthogonal to each other. Therefore, the values of phase $\phi_x$ are determined from the condition

$$\sum_{k=1}^{K} \sin\left(2\pi f_x t_{xk} - \phi_x\right) \cos\left(2\pi f_x t_{xk} - \phi_x\right) = 0 \qquad (6)$$

hence

$$\tan\left(2\phi_x\right) = \sum_{k=1}^{K} \sin\left(4\pi f_x t_{xk}\right) / \sum_{k=1}^{K} \cos\left(4\pi f_x t_{xk}\right) \qquad (7)$$

It can be seen that:

$$2\sin\left(2\pi f_x t_{xk} - \phi_x\right) \cos\left(2\pi f_x t_{xk} - \phi_x\right) = \sin\left(4\pi f_x t_{xk} - 2\phi_x\right)$$

and hence condition (6) is equivalent to requiring the average of:

$$\sin\left(4\pi f_x t_{xk} - 2\phi_x\right)$$

to be equal to zero. Even if this condition is not fully met, it would be desirable for this average to be low. The skilled man would have no difficulty in determining an acceptable maximum magnitude having regard to the particular requirements and operating conditions under consideration. It is likely that the average would have a magnitude which is no greater than 0.2, and preferably no greater than 0.1.

*Construction of a detection statistic*

When the pulse timings and the phase angle $\phi_x$ have been selected for each test frequency $f_x$ of interest, a signal detection statistic $D_x$ can be constructed as follows

$$D_x \triangleq \frac{1}{2 P_N} \left( \frac{I_x^2}{A_x} + \frac{Q_x^2}{B_x} \right) \qquad (8)$$

where $I_x$ and $Q_x$ are given by (2), $P_N$ is the noise power, and the normalizing coefficients $A_x$ and $B_x$ are given by

$$A_x = \sum_{k=1}^{K} c_{xk}^2 \qquad ; \qquad B_x = \sum_{k=1}^{K} s_{xk}^2 \qquad (9)$$

It should be pointed out that the above normalization will slightly reduce the effectiveness of clutter suppression, but the performance degradation will be negligible in practical applications.

When no object is present in a range cell under test, the Doppler processor will receive, within a period $T_0$, K samples $z(t_{xk})$ comprising noise $n(t_{xk})$ and stationary clutter $z_0$, so that

$$z(t_{xk}) = z_0 + n(t_{xk}), \quad k = 1, 2, \dots, K$$

If the power $(z_0 L_{x0})^2$ of 'leaked' clutter is negligible with respect to the noise power $P_N$, and the observed noise has a Gaussian distribution, the detection statistic (8) will follow an exponential distribution with unit mean, irrespective of the selected test frequency $f_x$.

In the preferred embodiment, the presence of a signal at a selected test frequency $f_x$ is declared if an observed value of the detection statistic $D_x$ has exceeded a predetermined decision threshold $\eta$.

As is known by the skilled man, the value of a decision threshold $\eta$ can be so chosen as to ensure an acceptable value of the probability of false alarm $P_{FA}$, i.e., the probability that the decision threshold $\eta$ has been exceeded by noise alone. Because, under noise-only assumption, the detection statistic $D_x$ has an exponential distribution, the detection test at frequency $f_x$ becomes

$$D_x > \eta = - \ln P_{FA}$$

For example, when a required $P_{FA} = 10^{-2}$, $\eta \approx 4.6\ P_N$; for $P_{FA} = 10^{-3}$, the value of $\eta$ rises to 6.91 $P_N$.

It is assumed that the power $P_N$ of input noise $n(t)$ is known, or it can be reliably estimated, e.g., from long-term observations. It is also possible to utilize other suitable prior-art techniques, such as CFAR (constant false-alarm rate) signal processing or knowledge-based clutter mapping.

If the power $(z_0 L_{x0})^2$ of 'leaked' clutter cannot be neglected, a decision threshold $\eta$ may be obtained from an analysis of a non-central $\chi^2$ distribution, as known from prior art; see for example: R. N. McDonough and A. D. Whalen: Detection of Signals in Noise. Academic Press, San Diego, 1995. pp. 137-141.

When a range cell under test contains a moving object, the Doppler processor will receive, within each observation interval $T_0$, K samples $z(t_{xk})$ comprising a sinusoidal signal $w(t_{xk})$ plus noise $n(t_{xk})$ and stationary clutter zo

$$z(t_{xk}) = w(t_{xk}) + z_0 + n(t_{xk})$$

where

$$w(t_{xk}) = W_0 \cos\left(2\pi f_D t_{xk} - \theta_0\right)$$

and $W_0$, $f_D$ and $\theta_0$ denote, respectively, three unknown parameters: amplitude, Doppler frequency and initial phase.

When neither noise nor clutter is present, and the delay $\tau$ of the reference signal used in the Doppler processor has been matched to the round trip delay of the probing signal, an observed value of the detection statistic $D_x$ will achieve its maximum at a test frequency $f_x$ equal to the unknown Doppler frequency $f_D$ of the signal $v(t_{xk})$. It should be noted that the resolution of the spectral analysis will approximately be equal to $1/T_0$, where $T_0$ is the observation interval.

The detection statistic (8) can be suitably modified to provide additional (binary) information needed to discriminate between approaching or receding objects being detected. Such information is contained in the *sign* of the determined Doppler frequency. The modifications required to retain this binary information are known to those skilled in the art.

Arrangements embodying the invention will now be described by way of example with reference to the accompanying drawings.

BRIEF DESCRIPTION OF THE DRAWINGS

Fig. 1 depicts schematically a relationship between parameters of a pulse train and the potential resolution in range and Doppler frequency.

Fig. 2 is a simplified block diagram of a microwave Doppler sensor utilizing short coherent pulses of electromagnetic energy.

Fig. 3a shows an example of a transmitted pulse train.

Fig. 3b depicts a pulse train reflected by a moving object.

Fig. 3c shows an example of a baseband signal comprising pulses amplitude-modulated by a Doppler frequency.

Fig. 3d illustrates the case of *sub-Nyquist* non-uniform sampling.

Fig. 4 depicts symbolically a method of interleaving in a non-uniform manner a number of identical pulse trains for use in a Doppler sensor according to the invention.

Fig. 5a is a symbolic representation of a periodic pulse train by a circular pattern of 8 dots arranged on the circumference of a circle.

Fig. 5b illustrates a method of obtaining a periodic pulse pattern by cyclic and repetitive replication of an underlying circular dot pattern.

Fig. 6a illustrates symbolically a method used to determine the autocorrelation function $R(\ell)$ for different shifts $\ell$.

Fig. 6b shows the autocorrelation function $R(\ell)$ of a periodic pattern.

Fig. 7a and Fig. 7b depict the autocorrelation functions of two pulse trains, represented by the same cyclic difference set, yet utilising pulses with different duration.

Fig. 8a depicts 8 out of 57 cyclic shifts producing 8 distinct pulse patterns.

Fig. 8b illustrates the operation of shifting the beginning of an observation interval to each pulse position.

Fig. 9 is a functional block diagram of a Doppler processor constructed in accordance with the invention.

Fig. 10 depicts symbolically pulse positions in a pulse pattern based on a cyclic difference set.

Fig. 11 depicts symbolically pulse positions in a pulse pattern obtained by a cyclic shift of an underlying pattern.

Fig. 12 depicts the optimum arrangement of pulses used for sampling a 627-kHz sinusoidal signal.

Fig. 13 depicts the response of the Doppler filter to a sinusoidal signal with its frequency $f_s$ swept between 0 and 980 kHz.

Fig. 14 shows the response of the filter excited by a mixture of noise and a sinusoidal signal with its frequency swept between 0 and 980 kHz.

Fig.15 depicts the response of the filter to a sinusoidal signal with a frequency swept between 0 and 980 kHz with added noise and a strong dc component that may represent stationary clutter.

Fig. 16 depicts symbolically the response characteristics of an arrangement of ten Doppler filters.

Fig. 17 shows fragments of clutter leakage $L_{x0}$ characteristics for two pulse patterns.

Fig. 18 is a block diagram of a microwave Doppler sensor according to the present invention.

Fig. 19 is a timing diagram to assist in explaining the operation of the Doppler processor of Fig. 9.

DETAILED DESCRIPTION OF THE PREFERRED EMBODIMENTS

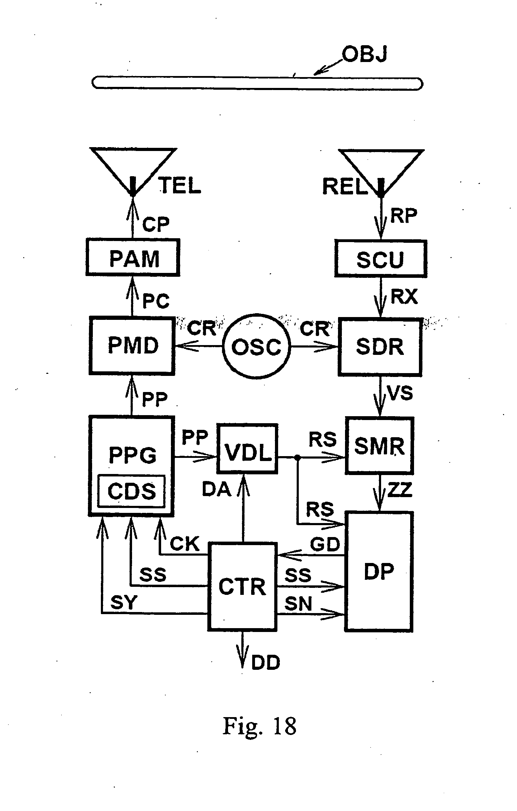

A Doppler sensor in accordance with the present invention is shown in Fig. 18 and corresponds with the prior art arrangement of Fig. 2 except as follows.

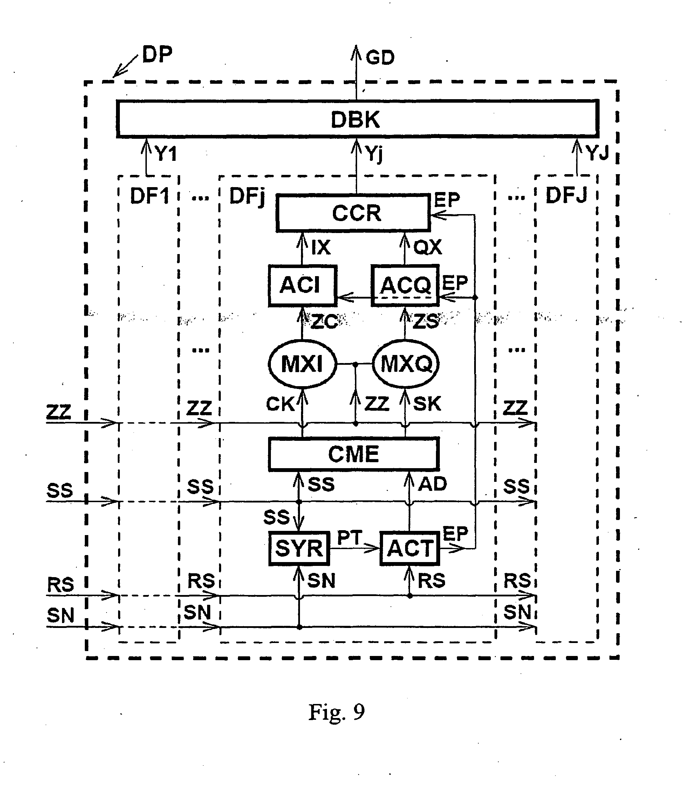

The pulse pattern generator PPG of Fig. 18 includes a cyclic difference set memory CDS and generates non-uniformly spaced pulses according to the technique described below. The Doppler processor DOP of Fig. 2 is replaced by a Doppler processor DP constructed in accordance with the present invention and shown in the functional block diagram of Fig. 9. Also, the control unit CTR generates additional signals, as explained further below.

The pulse pattern generator PPG may, like the generator PPG of Fig. 2, be arranged to generate pulses in the pattern shown at s(t) in Fig. 4. As indicated above, the pulse train s(t) can be regarded as the combination, by interleaving, of K regular pulse trains.

However, in the arrangement of Fig. 18, the pulses in the composite pulse train s(t) are preferably staggered in such a way that within a period $T_0$ the time interval between <u>any two different</u> pulses occurs exactly once among all such intervals, and the greatest time interval between <u>any two adjacent</u> pulses occurring in the train is less than a half of the period duration $T_0$.

Assume that the duration $T_0$ of each period of a transmitted pulse signal s(t) is equal to $M\Delta$, where M is an integer, and $\Delta$ denotes a unit time interval. Let $t_j$ and $t_k$ (j, k = 1, 2, ... , K) be the times of the occurrence of a j-th pulse and a k-th pulse, respectively. Accordingly, $t_j = m_j\Delta$ and $t_k = m_k\Delta$, where $m_j$ and $m_k$ ($0 \leq m_j, m_k \leq M-1$) are the pulse positions within the period. Therefore, the values of the differences

$$d_{jk} \underline{\Delta}(m_k - m_j), j \neq k$$

should all be distinct.

Owing to the distinct values of time intervals between any two pulses, the above construction of a periodic pulse signal s(t) provides a *non-redundant* sampling pattern with K sampling times per each period of duration $T_0$. (A conventional uniform sampling scheme with repeating intervals among sampling times can be viewed as being highly redundant.)

Preferably, the periodic pulse signal s(t) obtained by interleaving of K identical pulse trains is a representative mapping of a *cyclic difference sequence,* or a *cyclic difference set* (M, N, $\Lambda$). A cyclic difference set with parameters (M, N, $\Lambda$) is a set of N integers whose differences modulo M represent every nonzero residue from 1 to (M - 1) the same number $\Lambda$ of times.

By way of example, a periodic pulse train can be represented by a cyclic difference set (57,8,1) in which each cycle with M = 57 positions comprises N = 8 pulses placed at the following positions $\{m_1, m_2, m_3, m_4, m_5, m_6, m_7, m_8\}$:

$$0, \quad 1, \quad 6, \quad 15, \quad 22, \quad 26, \quad 45, \quad 55$$

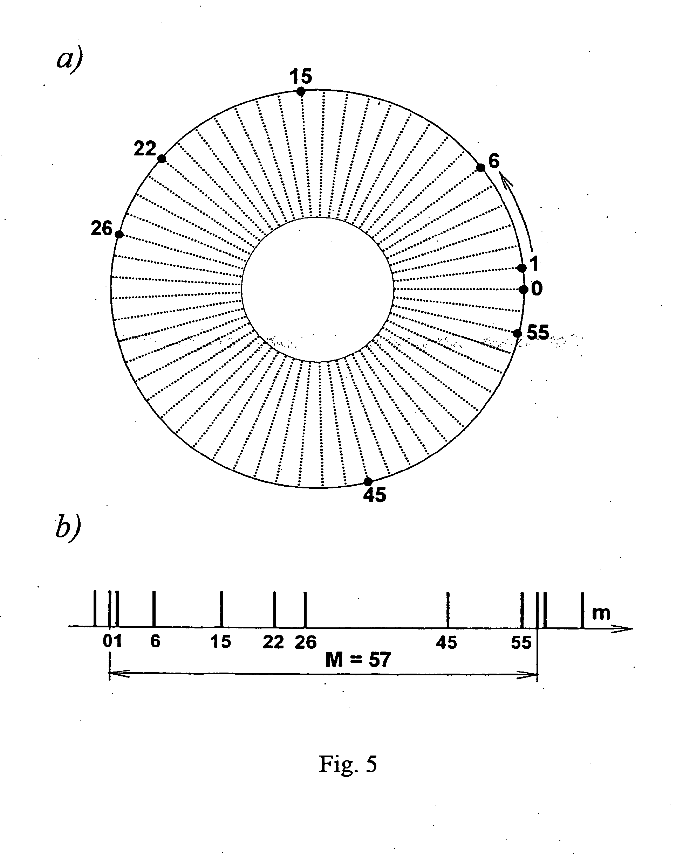

Fig. 5a is a suitable symbolic representation of the pulse train, comprising a circular pattern of 8 dots (each representing a pulse) placed on the circumference of a circle with 57 marked positions. The periodic (infinite) pulse pattern (train) can be obtained by cyclic (and repetitive) replication of this underlying circular dot pattern, as shown in Fig. 5b.

When a cyclic difference set (M, N, $\Lambda$) with $\Lambda$ = 1 is utilized for the construction of a periodic pulse signal s(t), the resulting sampling pattern, in addition to being *non-redundant,* will also become the *most efficient* sampling pattern with N sampling points per each signal period. The high efficiency of such a sampling pattern results from its cycle M being the shortest possible, given a predetermined number N of points with distinct (inter-point) distances. In such cases, the cycle length M is equal to $N^2 - N + 1$.

Specific positions at which N pulses are to be placed within a cycle M of a set (M, N, $\Lambda$) can be obtained from published tables of cyclic difference sets; see for example: P. Fan and M. Darnell: Sequence Design for Communications Applications, Wiley, 1996, or *La Jolla Cyclic Difference Set Repository,* http://www.ccrwest.org/diffsets.html. It should be pointed out that there may exist a number of distinct cyclic difference sets with the same values of all three parameters M,N and $\Lambda$.

In terms of a composite pulse train s(t), represented by a cyclic difference set (M, N, $\Lambda$), M is an integer length of the period, N is the number of pulses per period, and $\Lambda$ is a constant level of the autocorrelation function R(f) of the train s(t) for all integer shifts $\ell$ not equal to zero nor to multiple values of M. For all other shifts $\ell$, i.e., $\ell$ = iM, where i = 0, 1, 2, ... , the autocorrelation function R($\ell$) will assume its maximum value of N. Therefore, in order to ensure a small sidelobe level of R($\ell$) for improved range determination, the value of integer parameter $\Lambda$ should be small, preferably equal to one.

The (periodic) autocorrelation function R($\ell$) of a periodic pulse pattern with period M can be determined, using a representation corresponding to Fig. 5a, by counting the number of dot coincidences occurring (within a complete period) between a primary circular dot pattern and its replica obtained by a cyclic shift (rotation) of $\ell$ positions. In a cyclic difference set (M, N, $\Lambda$) with $\Lambda$ = 1, there will be exactly one coincidence of dots for any shift $\ell$ such that 1 $\neq$ iM, where i = 0, 1, 2, ... ; otherwise, for any shift $\ell$ = iM, i = 0, 1, 2, ... , the number of dot coincidences will always be equal to N, i.e., the number of dots per cycle.

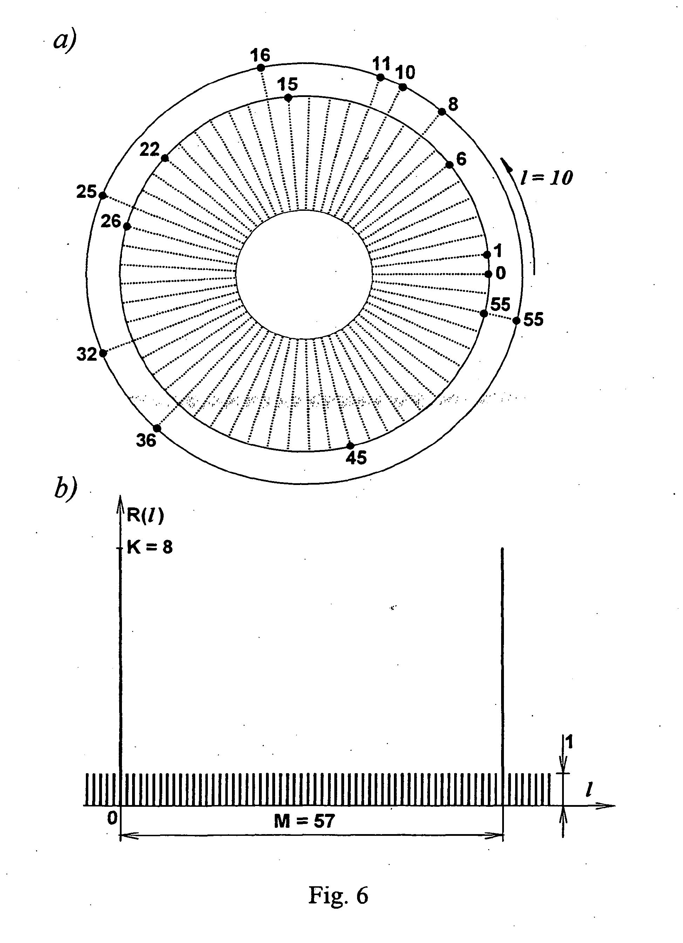

Consider the same periodic pulse train as analysed above and depicted in Fig. 5b. Fig. 6a illustrates symbolically the method used to determine the individual values of the autocorrelation function R($\ell$) corresponding to different shifts $\ell$. Fig. 6b shows the resulting periodic autocorrelation function R($\ell$). As seen, the period M is equal to 57, and the peak value of the autocorrelation function is the same as the maximum number of dot coincidences, i.e., 8.

Because a transmitted pulse train s(t) is a function of time, the 'unit' distance used in a symbolic pulse pattern is substituted by a predetermined unit time interval $\Delta$. Consequently, a sequence with the cycle length M will be represented by a pulse train s(t) with *a pulse pattern repetition interval,* PPRI, $T_0$ = M$\Delta$.

In the following, it will be assumed that all pulses in a train s(t) have the same duration $\Delta_0$ which may be less than, or equal to, the predetermined 'unit' time interval $\Delta$. The resulting periodic autocorrelation function $R_s(\tau)$ of a transmitted pulse train s(t) is a function of a *continuous* time shift $\tau$.

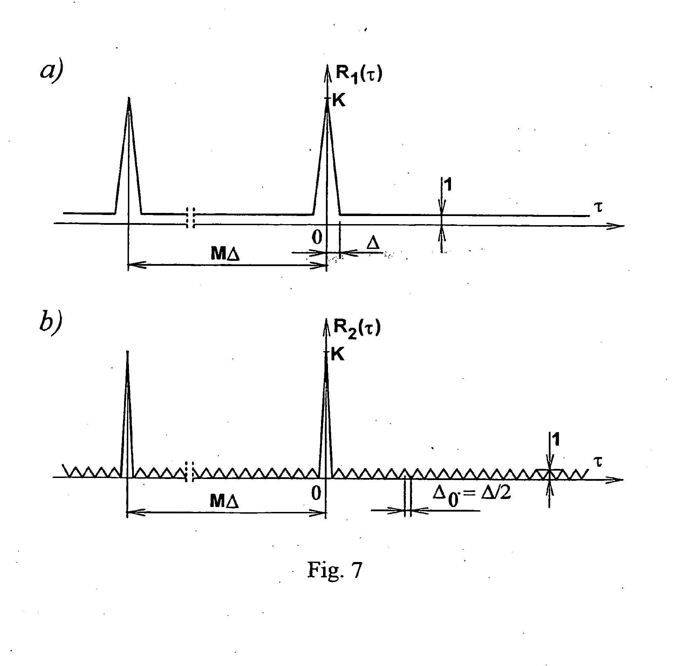

Fig. 7 depicts the autocorrelation functions, $R_1(\tau)$ and $R_2(\tau)$, of two pulse trains, $s_1(t)$ and $s_2(t)$, that are represented by the same cyclic difference set (M, N, $\Lambda$) with $\Lambda$ = 1, yet utilize pulses with different duration $\Delta_0$: $\Delta_0$ = $\Delta$ in Fig. 7 a, and $\Delta_0$ = $\Delta/2$ in Fig. 7b. The shape of the depicted autocorrelation functions is well suited to ranging applications; it is also the best achievable shape in the class of periodic signals comprising rectangular pulses with no intra-pulse modulation.

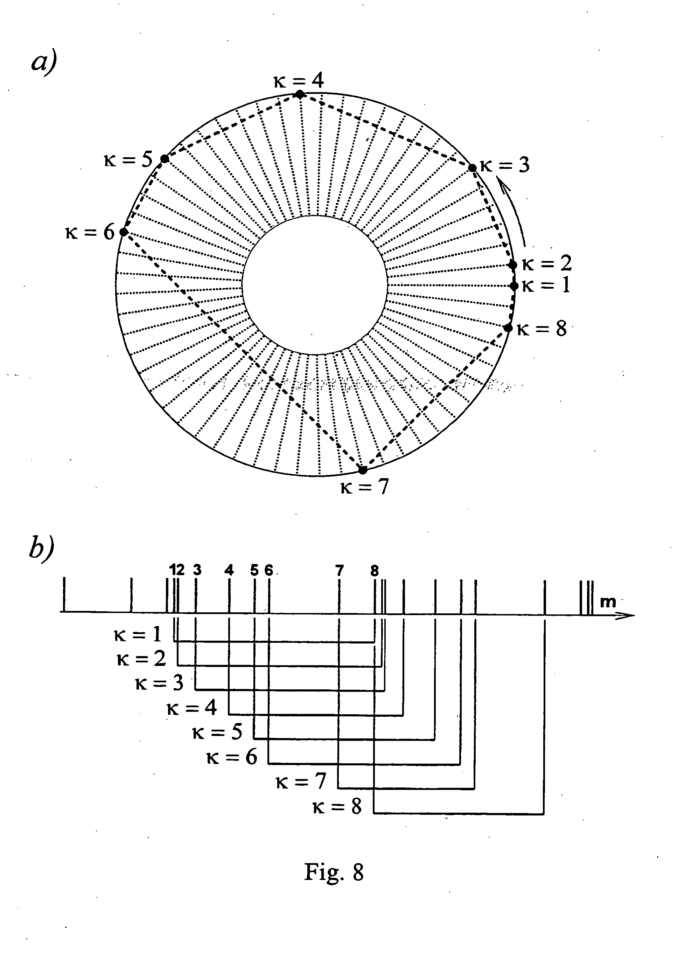

Fig. 8a depicts 8 out of 57 cyclic shifts producing 8 distinct shifted patterns, each derived from the basic pulse train of Fig. 5b. Fig. 8b illustrates the equivalent operation of shifting the beginning of an observation interval to each pulse position. As indicated above, an appropriate one of the shifted patterns can be selected for each test frequency $f_x$, to obtain an appropriate value of $\mu_x$.

The pulse pattern generator PPG of Fig. 18 includes a cyclic difference set memory CDS which stores the position of the pulses to be generated according to one or more predetermined cyclic difference sets so that the pulses are produced at the correct timing in response to the clock signals CK. Arrangements according to the preferred embodiment of the present invention can fully exploit the unique non-redundant sampling pattern provided by pulse trains as described above based on cyclic difference sets, using a Doppler processor as described below. In the arrangement described below, the number K of pulses used by the Doppler processor in a system using a cyclic difference set (M, N, $\Lambda$) is equal to N; however, this is not essential. Preferably, N $\leq$ K $\leq$ 2N. Preferably, $\Lambda$ = 1; however, it may in some cases be desirable for $\Lambda$ > 1, and for certain samples to be discarded so that the K derived samples include consecutive samples which are non-consecutive in the primary sequence defined by the cyclic difference set.

The control unit CTR of Fig. 18 generates a first synchronisation pulse SY and a pattern select signal SS, which are sent to the pulse pattern generator PPG. The generator PPG selects one of the cyclic difference sets in the memory CDS in accordance with the value of the pattern select signal SS, and, upon receipt of the synchronisation pulse SY, starts providing pulses with timings determined according to the selected cyclic difference set to the pulse modulator PMD.

The control unit also produces a second synchronising pulse SN which coincides with the first pulse of the basic period (i.e., that with $\kappa = 1$) of the time-delayed periodic pulse train RS; therefore, the delay between the synchronizing pulses, SY and SN is equal to the delay DA between the periodic pulse train PP and its time-delayed replica RS. The control unit sends the second synchronising pulse SN and the pattern select signal SS to the Doppler processor DP.

The Doppler processor DP of Fig. 9 comprises a bank of J identical Doppler filters, DF1, ... , DFj, ... , DFJ, with filters inputs driven in parallel and their outputs connected to a common decision block DBK. Although each Doppler filter of the bank is 'tuned' to a different test frequency $f_x$, the functions and operations performed by each filter are identical. The cellular structure of the Doppler processor DP makes it well suited to hardware ASIC implementation.

The Doppler processor DP receives signal samples ZZ to be processed from the sampler SMR, and, from the variable-delay line VDL, the time-delayed replica RS of the periodic pulse train PP generated by the generator PPG.

Each of the J identical Doppler filters, DF1, ... , DFj, ... , DFJ comprises the following circuits:

- a synchronizer SYR;
- an address counter ACT;
- a memory register CME storing constant coefficients;
- two multipliers, MXI and MXQ;
- two accumulators, ACI and ACQ;
- a channel combiner CCR.

The purpose of collaborative operation of synchronizer SYR, address counter ACT and memory register CME is to produce correct values of 'cosine' and 'sine' coefficients at the times coinciding with the appearance of signal samples ZZ to be processed.

For a preselected cyclic difference set, indicated by signal SS, the synchronizer SYR initiates the operation of the address counter ACT by loading a suitable <u>non-positive</u> initial state via preset input PT at the time coincident with synchronizing pulse SN. The address counter ACT changes its state by 'counting-up' pulses occurring in a time-delayed pulse train RS.

The initial state of the counter ACT corresponds to the beginning of the relevant observation interval for the filter. When the initial state is set to '$(-\kappa+1)$', with the circular shift $\kappa$ optimized for the test frequency $f_x$ of interest, the address counter ACT will reach state '0' at the time position of pulse $\kappa$ in the time-delayed pulse train RS. Next, the state of the counter ACT will be increased by 1 by each of the pulses of the train RS. When the number of all non-negative states of the counter equals the number (K) of pulses per period of RS, the state will again be '0' at the beginning of the next such defined period. Thereafter, the counter will be operating continually in correct synchronism with the time-delayed pulse train RS.

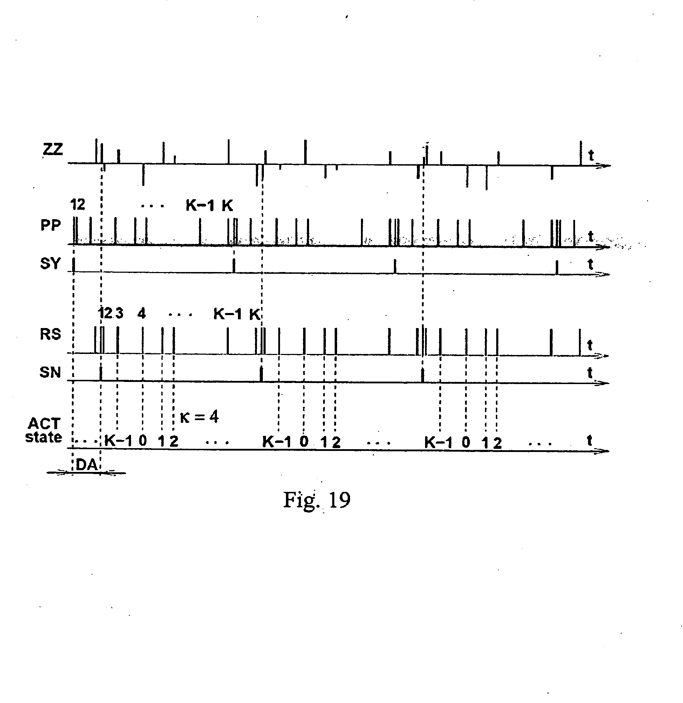

Fig. 19 is a timing diagram showing the time relationships between signal samples ZZ, pulse trains PP and RS, synchronizing pulses SY and SN, and states of the address counter ACT.

The correct synchronism will be maintained so long as the following 'sync' condition is met

$$\text{ACT state} = (K-\kappa+1) \mod K$$

at the time of synchronizing pulse SN.

It should be noted that the counter synchronization needs to be performed only once, for example, at the initial system 'power-up' state. However, if required, an auxiliary 'sync' monitor circuit may be incorporated. The circuit will monitor continually the above 'sync' condition and restore the synchronism when the condition has been violated.

The address counter ACT also produces an 'end-of-period' pulse EP which is used to reset the accumulators, ACI and ACQ, and transfer their outputs to the channel combiner CCR.

Each non-negative state of the counter ACT is used as an address AD of a cell of the memory register CME, the cell storing respective 'cosine' and 'sine' coefficients. For example, with K pulses per period, the states of the counter ACT will form a periodic sequence

$$\ldots , \text{'0'}, \text{'1'}, \text{'2'}, \ldots, \text{'(K-2)'}, \text{'(K-1)'}, \text{'0'}, \text{'1'}, \ldots$$

Therefore, the cell with address '0' will contain a pair of normalized coefficients appropriate for sample number one (corresponding to sample number $\kappa$ in the basic sequence defined by the selected cyclic difference set); similarly, the cell with address '(K-1)' will contain a pair of normalized coefficients appropriate for sample number K.

Signal samples ZZ received by each of the Doppler filters are multiplied in two multipliers, MXI and MXQ, by respective weighting coefficients, CK and SK, supplied by the memory register CME. The values of those coefficients are first determined from (5), and then suitably modified to retain the normalization given by (8) and (9), hence

$$\mathrm{CK} = \frac{c_{xk}}{\sqrt{A_x}} \; ; \qquad \mathrm{SK} = \frac{s_{xk}}{\sqrt{B_x}}$$

The output products, ZC and ZS, of the multipliers are supplied, respectively, to two accumulators, ACI and ACQ, to produce weighted sums, IX and QX.

Both the accumulators are set to zero by the common 'end-of-period' reset pulse EP, and, at the same time, their contents are transferred to the channel combiner CCR in response to pulse EP. The weighted sums are utilized by the channel combiner CCR to determine the value Yj of a detection statistic at a test frequency $f_x$ used by the Doppler filter.

The decision block DBK uses the values Yj of J detection statistics to produce a global decision GD indicating first, whether or not an object has been detected, and then, if an object has been detected, the number j = 1, 2, ... , J, of the Doppler filter with the largest value of an observed statistic. This number indicates the Doppler frequency corresponding to the radial velocity of a detected object.

Each filter may run continuously to generate an output signal based on the pulses received over multiple observation intervals. Alternatively, each filter may generate an output value Yj on the basis of pulses received during a single observation interval.

In the following, two examples of filter design are given to facilitate a better understanding of the main aspects of the invention, and also to illustrate some possible ways of applying the Doppler processor.

*Design I*

Assume that a 94-GHz microwave Doppler sensor under analysis is to be capable of detecting projectiles travelling at radial velocity of V = 1000 m/s, at ranges up to 15 km. Suppose also that a required range resolution, corresponding to the extent of each range cell, should be about 15 m, or better.

The Doppler frequency $f_D$, corresponding to the velocity V of interest, can be determined from

$$\mathbf{f_D = 2V/\lambda_0 \approx 627 \; kHz}$$

hence, the test frequency $f_x$ used by a single-filter Doppler processor will also be equal to 627 kHz.

Because the unambiguous range Ro = 15 km, the period $T_0$ of a composite pulse train s(t) under design is assumed to be 100 μs. The extent of each resolution cell indicates that about 1000 'notional' range resolution cells will be needed.

The inspection of available sources listing cyclic difference sets has shown that a cyclic difference set (M=993, N=32, Λ=1), shown in Table 1 below, can been exploited for the construction of a composite pulse train s(t) in which K=N=32 pulses are placed at the following positions $\{m_1, m_2,..., m_{31}, m_{32}\}$:

<div align="center">

Table 1

| | | | | | | | |
|---|---|---|---|---|---|---|---|
| 0, | 1, | 23, | 31, | 60, | 66, | 77, | 84, |
| 87, | 195, | 253, | 257, | 291, | 331, | 401, | 416, |
| 468, | 473, | 515, | 590, | 606, | 618, | 711, | 713, |
| 752, | 761, | 841, | 867, | 892, | 912, | 961, | 980 |

</div>

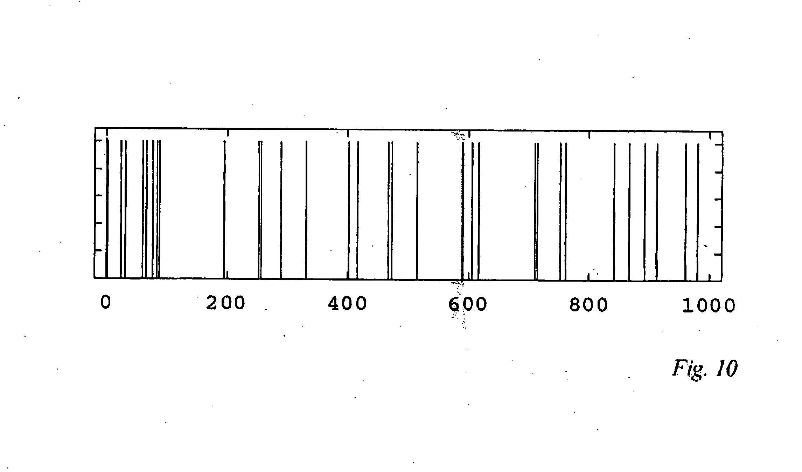

Fig. 10 depicts symbolically pulse positions in the above pulse pattern. Only a single pattern cycle is shown, the pulse timings being indicated along the horizontal axis in unit time intervals. The pattern can also be viewed as a shifted pattern with κ = 1 and shift zero.

Because the cycle M of the cyclic difference set is 993, and the period $T_0$ of the pulse train is 100 μs, the value of a 'unit' time interval Δ is equal to $T_0$/M ≈ 100.7 ns. The value of each of K = 32 sampling times $\{t_k\}$ can be determined by multiplying a respective pulse position $m_k$, as indicated in Table 1, by the unit time interval Δ. Also, the duration $\Delta_0$ of transmitted pulses should not exceed 100.7 ns; for example, when $\Delta_0$ = 60 ns, the potential range resolution will be limited to 9 m.

All 32 shifted patterns of the pulse train represented by the above cyclic difference set are now examined to find the shift $\mu_x$ (hence, a corresponding shifted pattern) which will exhibit the smallest clutter leakage $L_{x0}$ at the test frequency $f_x$ = 627 kHz.

A computer search has shown that the pulse pattern optimal for frequency analysis at $f_x$ = 627 kHz corresponds to a shifted pattern with $\kappa$ = 9, obtained by left-shifting pulse number nine (originally at position 87) to position zero; therefore, $\mu_x = t_9 = 87\Delta$. At $f_x$ = 627 kHz, the value of clutter leakage power per pulse $L_{x0}^2/32$ happens to be extremely small and equal to -48dB.

The pulse positions within an optimum shifted pattern with $\kappa$ = 9 are as follows:

<u>Table 2</u>

| 0, | 108, | 166, | 170, | 204, | 244, | 314, | 329, |
|---|---|---|---|---|---|---|---|
| 381, | 386, | 428, | 503, | 519, | 531, | 624, | 626, |
| 665, | 674, | 754, | 780, | 805, | 825, | 874, | 893, |
| 906, | 907, | 929, | 937, | 966, | 972, | 983, | 990 |

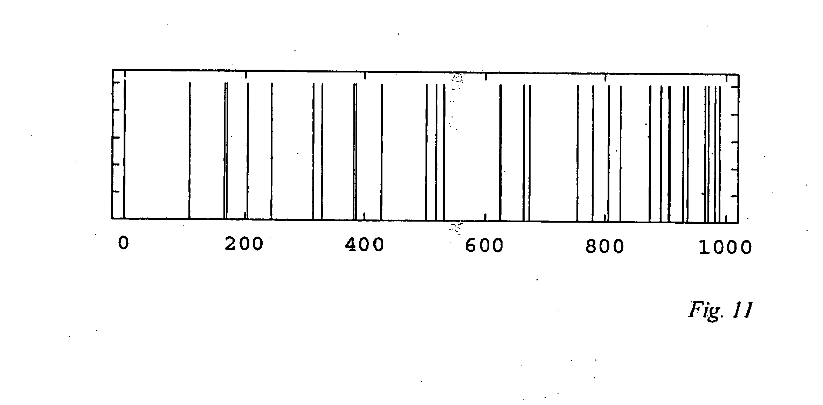

Fig. 11 is a diagram similar to Fig. 10 but depicting symbolically pulse positions for a single cycle of the above shifted pulse pattern.

The next step of the Doppler filter design is adjusting the phase angle $\phi_x$ at the test frequency $f_x$ = 627 kHz for the selected optimum pattern with $\kappa$ = 9. The optimum value of $\phi_x$, determined from (6), is equal to -22.1°.

Because now the values of the parameters $t_k$, $\mu_x$ and $\phi_x$ are already known, all 32 coefficient pairs $\{(c_{xk}, s_{xk})\}$ can be determined from (3) and normalised in order to derive the sets of values CK, SK stored in the memory CME.

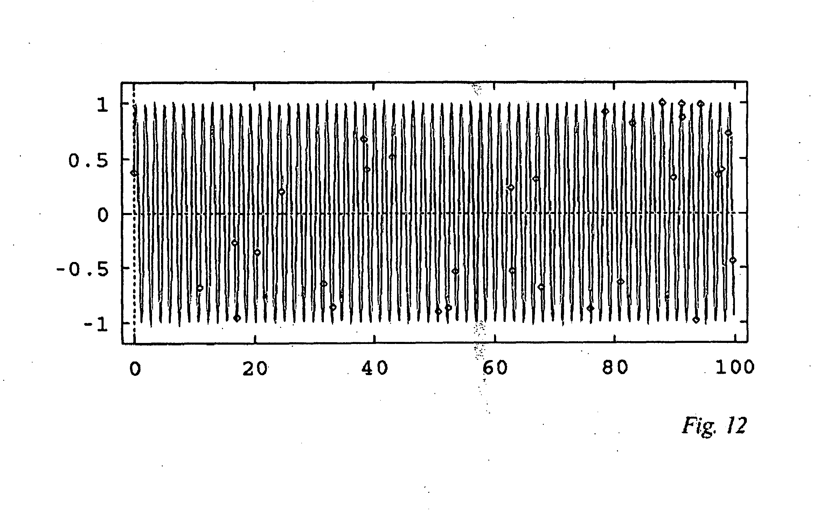

For illustration purposes, Fig. 12 depicts the form of an optimum shifted pattern used to detect a 627-kHz sinusoidal signal. In Fig. 12, the vertical axis represents arbitrary units and the horizontal axis represents time in microseconds. The figure shows a nominal 627-kHz sinusoidal signal, and the points on the signal waveform which would be sampled using the selected shifted pattern. (It should be noted that in practical arrangements a complete sinusoidal signal may never exist. In a Doppler sensor arrangement, reflected pulses are amplitude modulated as indicated in Fig. 3, the modulation pattern corresponding to a nominal sine wave.)

It should be pointed out that within the observation interval of 100 $\mu$s, there will appear almost 63 cycles of a 627-kHz sinusoidal Doppler signal. Therefore, a conventional uniform sampling would require *at least* 126 samples for frequency analysis. However, as illustrated below, with shifted sampling based on cyclic difference sets, a suitable frequency analysis can be accomplished with only 32 samples. This example of successful sub-Nyquist sampling demonstrates one of the many advantages of the invented method.

The performance of a single-filter Doppler processor, designed in accordance with the invention, has been studied via computer simulations; for illustration purposes, some of the representative results are shown below.

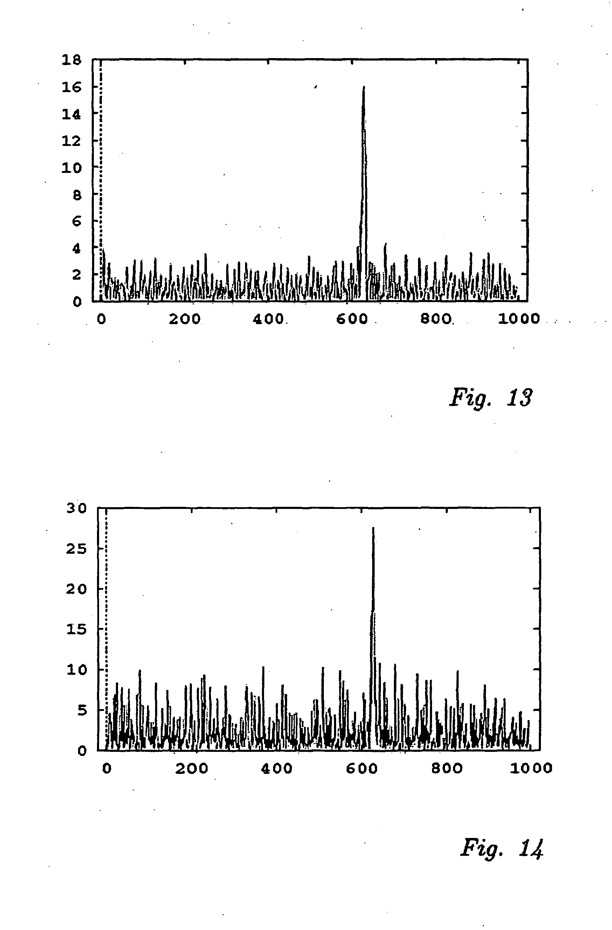

Fig. 13 depicts the response of the Doppler filter with test frequency $f_x$ = 627 kHz to a sinusoidal signal with its frequency $f_s$ swept between 0 and 980 kHz. The response reveals a sidelobe structure quite different from a well-known 'sin x/x pattern', characteristic for uniform sampling.

Fig.14 shows the response of the filter excited by the same input signal, but with added noise of the same power as the signal.

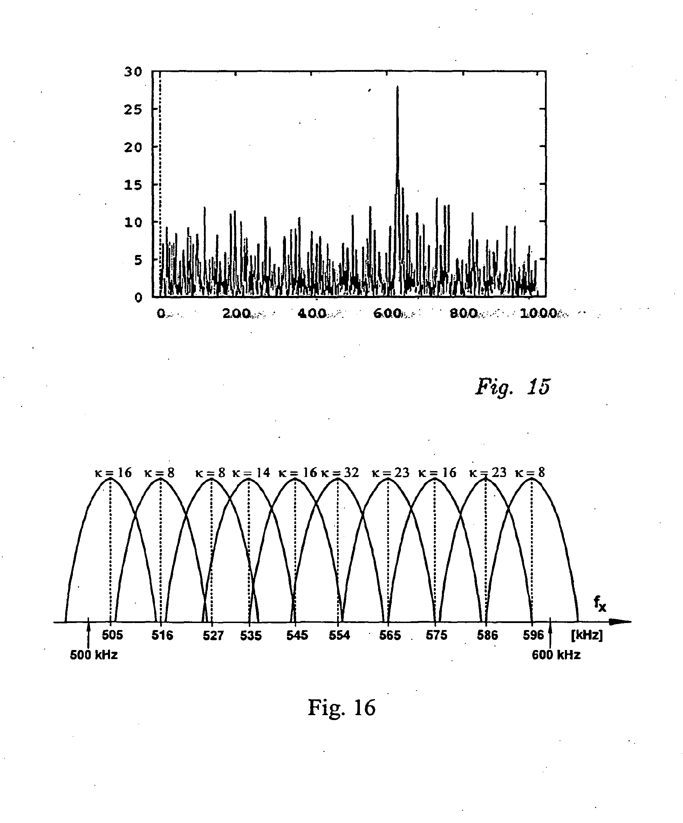

Fig.15 depicts the response of the filter to the same input signal and noise, but with added dc offset with power 625 times greater than that of the input signal.

In Figs. 13 to 15, the vertical axis represents filter response in arbitrary units and the horizontal axis represents frequency in kHz. The large peaks all occur correctly at $f_x$ =627 kHz.

*Design II*

It is assumed that the same 94-GHz microwave Doppler sensor, utilizing the same composite pulse train, should be able to detect signals with Doppler frequencies ranging from 500 kHz to 600 kHz. Assume also that within that frequency range of interest, clutter leakage power per pulse $L_{x0}^2/32$ should not exceed -30dB.

Because the frequency resolution of spectral analysis is approximately equal to $1/T_0$ =10 kHz, a bank comprising at least ten filters will be needed to cover the required frequency range. It has been found that the following five shifted patterns provide at least the required 30-dB clutter attenuation at indicated centre frequencies in kHz

Table 3
**circularly shifted pattern** $\kappa$

| 8 | 14 | 16 | 23 | 32 |
|---|---|---|---|---|
| 516 | 535 | 505 | 565 | 554 |
| 527 | | 545 | 586 | |
| 596 | | 575 | | |

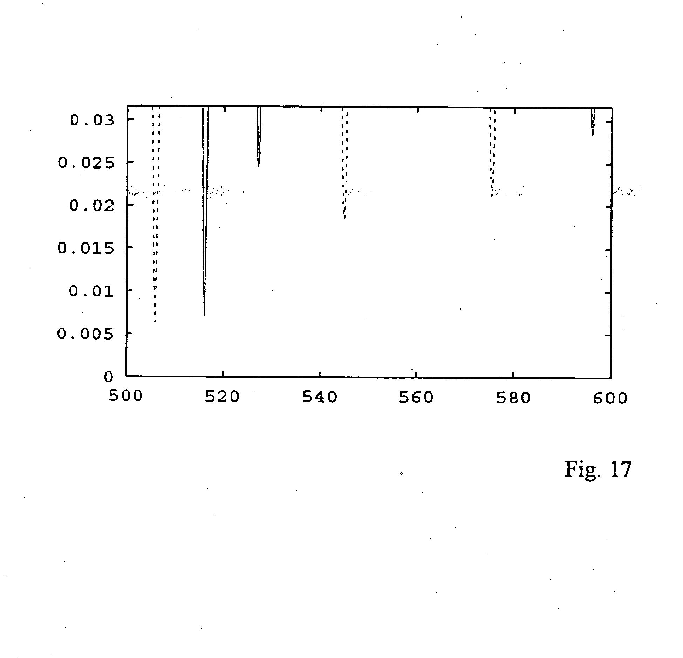

As seen each of two patterns, $\kappa = 8$ and $\kappa = 16$, covers three 10-kHz frequency bands within the 500-600 kHz range. Fig. 16 depicts symbolically the response characteristics of the ten 'virtual' Doppler filters. Fig. 17 shows fragments of clutter leakage characteristics obtained for shifted patterns $\kappa = 8$ (solid lines) and $\kappa = 16$ (broken lines), within the frequency range of interest, the vertical axis representing attenuation ratio and the horizontal axis representing frequency in kHz.

It will be noted that the frequencies of the various Doppler filters are not uniformly distributed. For each filter, an optimum frequency has been selected such that clutter leakage, when using the optimum shifted pattern, is minimised.

The arrangement of Fig. 9 may be designed for use with a single cyclic difference set and each filter may store a single initial counter state (corresponding to $\kappa$ and representing the shifted pattern to be used in the filter), together with multiple coefficients CK, SK, one pair of coefficients for each value in the cyclic difference set. This forms a complete set of data used for detecting objects exhibiting a Doppler frequency within a predetermined range.

Alternatively, the memory CDS may store multiple cyclic difference sets, and the Doppler processor DP may store multiple sets of values, each set corresponding to a respective shifted pattern based on one of the cyclic difference sets and being intended for use in a respective different range of Doppler frequencies.

In a further alternative arrangement, the Doppler processor DP of Fig. 9 may be provided with a coefficient calculator which responds to an input signal indicative of (at least) a range of Doppler frequencies of interest. In response to the input signal, the coefficient calculator can, using the principles set out above:

(i) select a pulse sequence, for example based on a cyclic difference set, preferably by choosing one of a number of pre-stored pulse sequences,
(ii) using either a pre-stored or inputted value representing a desired observation interval, calculate a nominal centre frequency for each of the filters of the filter bank,
(iii) for each filter, obtain a set of shifted frequencies all within a predetermined range of the nominal centre frequency;
(iv) for each filter, select the value $\kappa$ and the shifted frequency $f_x$ giving the lowest clutter leakage value, and
(v) for each filter, calculate a pair of coefficient values CK, SK, for each of the pulses within the sequence defined by the selected value $\kappa$.

This data is then uploaded to the memory CME and used by the Doppler processor DP for the subsequent generation of pulses and processing of the reflections of the pulses.

In a still further alternative arrangement, the primary sequence of pulses generated by the generator PPG includes at least some random pulse spacings. (The term 'random' is used herein to cover deterministic pseudo-random sequences such as the cyclic sequences generated by shift registers with appropriate feedback circuits, as well as preferred chaotic or truly random arrangements in which the pulse timings are unpredictable). The Doppler processor, in addition to having a coefficient calculator, would have means for selective and dynamic derivation of a set of pulses which meet the required timing conditions, by repeatedly testing the successive sample spacings, for example to calculate the effects on clutter leakage. By lengthening or shifting the observation interval, and/or by discarding intermediate samples (so that the K derived samples include consecutive samples which are non-consecutive in the primary sequence), the clutter leakage will vary. The samples can be selected in response to the clutter leakage falling below a predetermined value, though preferably this occurs when the observation period exceeds a predetermined minimum duration.

In all the embodiments described above, the timings of the samples in the primary sequence (and, where some of these are discarded, preferably the timings of the samples derived therefrom for use by the Doppler processor) are sufficiently non-uniform as to ensure that, within a given observation interval $T_0$, there is no ambiguity in pulse identification.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

**Claims**

1. A method of detecting a sinusoidal signal at a predetermined test frequency $f_x$ by using samples derived from a primary sequence of non-uniformly spaced signal samples, the method comprising:

   (a) deriving K samples at non-uniformly spaced times $t_{xk}$ such that the average of a cosine wave of frequency $f_x$ sampled at said times $t_{xk}$ would be substantially zero and the average of a sine wave of frequency $f_x$ sampled at said times $t_{xk}$ would be substantially zero;
   (b) multiplying each sample by a respective one of a set of K first predetermined coefficients $c_{xk}$ and by a respective one of a set of K second predetermined coefficient $s_{xk}$ to derive K first quantities and K second quantities;
   (c) deriving a first measure by combining the first quantities and a second measure by combining the second quantities; and
   (d) determining that a sinusoidal signal of frequency $f_x$ is present in dependence on the magnitudes of both said first and second measures.

2. A method as claimed in claim 1, wherein the primary sequence comprises repeated cycles in each of which the sample spacings are non-uniform.

3. A method as claimed in claim 2, wherein the number of samples in each cycle of the primary sequence is C, and wherein $C \leq K \leq 2C$.

4. A method as claimed in any preceding claim, wherein at least some of the sample spacings are random.

5. A method as claimed in claim 4, including the step of repeatedly testing the successive sample spacings of the primary sequence to derive the K samples.

6. A method as claimed in claim 5, including the step of changing an observation interval containing the K derived samples until a predetermined condition is met.

7. A method as claimed in claim 5 or claim 6, including the step of discarding samples so that the K derived samples include consecutive samples which are non-consecutive in the primary sequence.

8. A method as claimed in any one of claims 1 to 3, wherein the primary sequence has sample spacings defined by a cyclic difference set with parameters (M, N, A), the cyclic difference set consisting of N integers whose differences modulo M represent every nonzero residue from 1 to (M - 1) the same number $\Lambda$ of times.

9. A method as claimed in claim 8, wherein $\Lambda = 1$.

10. A method as claimed in claim 8, wherein $\Lambda > 1$ and including the step of discarding samples so that the K derived samples include consecutive samples which are non-consecutive in the primary sequence.

11. A method as claimed in any preceding claim, when used to detect the presence of a sinusoidal signal at two or more test frequencies.

12. A method as claimed in claim 10, wherein the timings $t_{xk}$ of the K derived samples used for a first of the test frequencies differ from the timings $t_{xk}$ of the K derived samples used for a second of the test frequencies.

13. A method as claimed in claim 12, wherein the K derived samples used for said first test frequency and the K derived samples used for said second test frequency are both derived from samples with the same primary sequence, the primary sequence comprising repeated cycles and the K derived samples used for said first test frequency starting at a different point within a cycle of the primary sequence from the K derived samples used for said second test frequency.

14. A method as claimed in claim 12, wherein the K derived samples used for said first test frequency and the K derived samples used for said second test frequency are derived from different primary sequences.

15. A method as claimed in claim 11, claim 12 or claim 14, wherein the number of K derived samples used for said first test frequency differs from the number of K derived samples used for said second test frequency

16. A method as claimed in any preceding claim, wherein the non-uniformly spaced times $t_{xk}$ are such that the magnitudes $m_c$, $m_s$ of the averages of said cosine and sine waves are no greater than 0.1 times the respective amplitudes of said cosine and sine waves.

17. A method as claimed in claim 16, wherein the non-uniformly spaced times $t_{xk}$ are such that the sum of the squared magnitudes $m_c$, $m_s$ of the averages is less than or equal to 0.01.

18. A method as claimed in any preceding claim, wherein the K derived samples are selected from the primary sequence in such a way as to minimize the sum of the squared magnitudes $m_c$, $m_s$ of the averages of said cosine and sine waves.

19. A method as claimed in any preceding claim, wherein the K derived samples and the frequency $f_x$ are selected in such a way as to minimize the sum of the squared magnitudes $m_c$, $m_s$ of the averages of said cosine and sine waves.

20. A method as claimed in any preceding claim, wherein the coefficients $c_{xk}$ and $s_{xk}$ are derived from :

$$c_{xk} = \cos(2\pi f_x t_{xk} - \phi_x) ; \quad s_{xk} = \sin(2\pi f_x t_{xk} - \phi_x)$$

and where $\phi_x$ is selected so that the average of samples taken at times $t_{xk}$ of a waveform $\sin(4\pi f_x t_{xk} - 2\phi_x)$ is substantially equal to zero.

21. A method as claimed in claim 20, wherein the magnitude of the average of the samples of the waveform $\sin(4\pi f_x t_{xk} - 2\phi_x)$ is no greater than 0.2.

22. A method as claimed in any preceding claim, wherein $\phi_x$ meets the condition:

$$\tan(2\phi_x) = \sum_{k=1}^{K} \sin(4\pi f_x t_{xk}) / \sum_{k=1}^{K} \cos(4\pi f_x t_{xk}) \ .$$

23. A method as claimed in any preceding claim, including the step of generating said primary sequence of samples.

24. A method of detecting an object, the method comprising transmitting pulses at non-uniform intervals, detecting reflections of the pulses from the object, the reflected pulses constituting samples modulated by a sinusoidal signal having a Doppler frequency resulting from relative movement of the object, and detecting the sinusoidal signal using a method as claimed in any preceding claim.

25. Apparatus for detecting the presence of a sinusoidal signal, the apparatus being arranged to operate according to a method of any one of claims 1 to 23.

26. A Doppler sensor arranged to detect an object using a method as claimed in claim 24.

**Patentansprüche**

1. Verfahren zum Erfassen eines sinusförmigen Signals mit einer vorbestimmten Prüffrequenz $f_x$ unter Verwendung von Samples, die aus einer primären Abfolge von ungleichmäßig beabstandeten Signalen abgeleitet wurden, wobei das Verfahren umfasst:

(a) Ableiten von K-Samples an ungleichmäßig beabstandeten Zeiten $t_{xk}$, so dass das Mittel einer Kosinuswelle der Frequenz $f_x$, die an den Zeiten $t_{xk}$ abgetastet wurde, im Wesentlichen null betragen würde, und das Mittel einer Sinuswelle der Frequenz $f_x$, die an den Zeiten $t_{xk}$ abgetastet wurde, im Wesentlichen null betragen würde;
(b) Multiplizieren eines jeden Samples mit einem entsprechenden ersten vorbestimmten Koeffizienten $c_{xk}$ aus

dem Satz K und mit einem entsprechenden zweiten vorbestimmten Koeffizienten $s_{xk}$, um die ersten K-Mengen und die zweiten K-Mengen abzuleiten;

(c) Ableiten einer ersten Messung durch Kombinieren der ersten Mengen und einer zweiten Messung durch Kombinieren der zweiten Mengen; und

(d) Bestimmen, dass ein sinusförmiges Signal der Frequenz $f_x$ vorhanden ist, in Abhängigkeit der Größen von sowohl der ersten als auch der zweiten Messung.

2. Verfahren nach Anspruch 1, wobei die primäre Abfolge wiederholte Zyklen umfasst, wobei die Sample-Abstände in jedem Zyklus ungleichmäßig sind.

3. Verfahren nach Anspruch 2, wobei die Anzahl der Samples in jedem Zyklus der primären Abfolge C ist, und wobei $C \leq K \leq 2C$.

4. Verfahren nach einem der vorangegangenen Ansprüche, wobei zumindest einige der Sample-Abstände zufällig sind.

5. Verfahren nach Anspruch 4, einschließlich dem Schritt des wiederholten Prüfens der aufeinanderfolgenden Sample-Abstände der primären Abfolge, um die K-Samples abzuleiten.

6. Verfahren nach Anspruch 5, einschließlich dem Schritt des Änderns eines Beobachtungsintervalls, welches die K-abgeleiteten Samples enthält, bis eine vorbestimmte Bedingung erfüllt ist.

7. Verfahren nach Anspruch 5 oder Anspruch 6, einschließlich dem Schritt des Verwerfens von Samples, so dass die K-abgeleiteten Samples aufeinanderfolgende Samples enthalten, die in der primären Abfolge nicht aufeinanderfolgend sind.

8. Verfahren nach einem der Ansprüche 1 bis 3, wobei die primäre Abfolge Sample-Abstände aufweist, die von einer zyklischen Differenz definiert werden, welche mit Parametern $(M, N, \Lambda)$ festgelegt ist, wobei die festgelegte zyklische Differenz aus N-Ganzzahlen besteht, deren Differenzen-Modulo-M jeden Nichtnullrest von 1 bis (M-1) derselben Anzahl $\Lambda$ an Zeiten darstellt.

9. Verfahren nach Anspruch 8, wobei $\Lambda = 1$.

10. Verfahren nach Anspruch 8, wobei $\Lambda > 1$ und der Schritt des Verwerfens von Samples beinhaltet ist, so dass die K-abgeleiteten Samples aufeinanderfolgende Samples enthalten, die in der primären Abfolge nicht aufeinanderfolgend sind.

11. Verfahren nach einem der vorangegangenen Ansprüche, wenn verwendet, um das Vorhandensein eines sinusförmigen Signals an zwei oder mehr Prüffrequenzen zu erfassen.

12. Verfahren nach Anspruch 10, wobei sich die Zeitintervalle $t_{xk}$ der K-abgeleiteten Samples, die für eine erste der Prüffrequenzen verwendet werden, von den Zeitintervallen $t_{xk}$ der K-abgeleiteten Samples unterscheiden, die für eine zweite der Prüffrequenzen verwendet werden.

13. Verfahren nach Anspruch 12, wobei die K-abgeleiteten Samples, die für die erste Prüffrequenz verwendet werden, und die K-abgeleiteten Samples, die für die zweite Prüffrequenz verwendet werden, beide von den Samples mit derselben primären Abfolge abgeleitet wurden, wobei die primäre Abfolge wiederholte Zyklen umfasst, und die K-abgeleiteten Samples, die für die erste Prüffrequenz verwendet werden, an einem anderen Punkt innerhalb des Zyklus der primären Abfolge von den K-abgeleiteten Samples beginnen, die für die zweite Prüffrequenz verwendet werden.

14. Verfahren nach Anspruch 12, wobei die K-abgeleiteten Samples, die für die erste Prüffrequenz verwendet werden, und die K-abgeleiteten Samples, die für die zweite Prüffrequenz verwendet werden, von verschiedenen primären Abfolgen abgeleitet werden.

15. Verfahren nach Anspruch 11, Anspruch 12 oder Anspruch 14, wobei sich die Anzahl an K-abgeleiteten Samples, die für die erste Prüffrequenz verwendet werden, von der Anzahl an K-abgeleiteten Samples, die für die zweite Prüffrequenz verwendet werden, unterscheidet.

**16.** Verfahren nach einem der vorangegangenen Ansprüche, wobei die ungleichmäßig beabstandeten Zeiten $t_{xk}$ so sind, dass die Größen mc, ms der Mittel der Kosinus- und Sinuswelle nicht größer sind als 0,1 mal die entsprechenden Amplituden der Kosinus- und Sinuswelle.

**17.** Verfahren nach Anspruch 16, wobei die ungleichmäßig beabstandeten Zeiten $t_{xk}$ so sind, dass die Summe der Quadratgrößen mc, ms der Mittel geringer oder gleich 0,01 ist.

**18.** Verfahren nach einem der vorangegangenen Ansprüche, wobei die K-abgeleiteten Samples so aus der primären Abfolge ausgewählt werden, dass die Summe der Quadratgrößen mc, ms der Mittel der Kosinus- und Sinuswelle minimiert werden.

**19.** Verfahren nach einem der vorangegangenen Ansprüche, wobei die K-abgeleiteten Samples und die Frequenz $f_x$ so ausgewählt werden, dass die Summe der Quadratgrößen mc, ms der Mittel der Kosinus- und Sinuswelle minimiert werden.

**20.** Verfahren nach einem der vorangegangenen Ansprüche, wobei die Koeffizienten $c_{xk}$ und $s_{xk}$ abgeleitet werden von

$$c_{xk} = \cos\ (2\pi\ f_x\ t_{xk}-\Phi_x);\ s_{xk} = \sin\ (2\pi\ f_x\ t_{xk}-\Phi_x);$$

und wo $\Phi_x$ so ausgewählt wird, dass das Mittel der an den Zeiten $t_{xk}$ einer Wellenform $\sin(4\pi f_x t_{xk}-2\Phi_x)$ genommen Samples, im Wesentlichen gleich null ist.

**21.** Verfahren nach Anspruch 20, wobei die Größe des Mittels der Samples der Wellenform $\sin(4n f_x t_{xk}-2\Phi_x)$ maximal 0,2 ist.

**22.** Verfahren nach einem der vorangegangenen Ansprüche, wobei $\Phi_x$ die folgende Bedingung erfüllt:

$$\tan\left(2\phi_x\right) = \sum_{k=1}^{K}\sin\left(4\pi f_x t_{xk}\right) / \sum_{k=1}^{K}\cos\left(4\pi f_x t_{xk}\right).$$

**23.** Verfahren nach einem der vorangegangenen Ansprüche, einschließlich dem Schritt des Erzeugens der primären Sample-Abfolge.

**24.** Verfahren zum Erfassen eines Objektes, wobei das Verfahren umfasst: das Übertragen von Impulsen in ungleichmäßigen Intervallen, das Erfassen von Reflektionen der Impulse von dem Objekt, wobei die reflektierten Impulse Samples bilden, die von einem sinusförmigen Signal mit einer Dopplerfrequenz moduliert wurden, die aus der relativen Bewegung des Objektes resultiert, und das Erfassen des sinusförmigen Signals mithilfe eines Verfahrens nach einem der vorangegangenen Ansprüche.

**25.** Vorrichtung zum Erfassen des Vorhandenseins eines sinusförmigen Signals, wobei die Vorrichtung angeordnet ist, um gemäß einem Verfahren nach einem der Ansprüche 1 bis 23 zu arbeiten.

**26.** Dopplersensor, der angeordnet ist, um ein Objekt mithilfe eines Verfahrens nach Anspruch 24 zu erfassen.


**Revendications**

**1.** Procédé de détection d'un signal sinusoïdal à une fréquence d'essai prédéterminée $f_x$ en utilisant des échantillons obtenus à partir d'une séquence primaire d'échantillons de signaux espacés de façon non uniforme, le procédé comprenant les étapes consistant à :

(a) obtenir K échantillons à des instants espacés de manière non uniforme $t_{xk}$ de telle sorte que la moyenne d'une onde cosinusoïdale de fréquence $f_x$ échantillonnée auxdits instants $t_{xk}$ soit sensiblement égale à zéro, et que la moyenne d'une onde sinusoïdale de fréquence $f_x$ échantillonnée auxdits instants $t_{xk}$ soit sensiblement

égale à zéro ;

(b) multiplier chaque échantillon par un coefficient respectif d'un ensemble de K premiers coefficients prédéterminés respectifs $c_{xk}$, et par un ensemble de K seconds coefficients prédéterminés $s_{xk}$ de manière à obtenir K premières quantités et K secondes quantités ;

(c) obtenir une première mesure en combinant les premières quantités, et une seconde mesure en combinant les secondes quantités ; et

(d) déterminer qu'un signal sinusoïdal de fréquence $f_x$ est présent en fonction des grandeurs desdites première et seconde mesures.

2. Procédé selon la revendication 1, dans lequel la séquence primaire comprend des cycles répétés dans chacun desquels les intervalles entre les échantillons ne sont pas uniformes.

3. Procédé selon la revendication 2, dans lequel le nombre d'échantillons dans chaque cycle de la séquence primaire est C, et dans lequel $C \leq K \leq 2\,C$.

4. Procédé selon l'une quelconque des revendications précédentes, dans lequel au moins certains des intervalles entre les échantillons sont aléatoires.

5. Procédé selon la revendication 4, comprenant l'étape consistant à contrôler de manière répétitive les intervalles entre les échantillons successifs de la séquence primaire de manière à obtenir les K échantillons.

6. Procédé selon la revendication 5, comprenant l'étape consistant à modifier un intervalle d'observation qui contient les K échantillons obtenus jusqu'à ce qu'une condition prédéterminée soit remplie.

7. Procédé selon la revendication 5 ou la revendication 6, comprenant l'étape consistant à écarter des échantillons de telle sorte que les K échantillons obtenus comprennent des échantillons consécutifs qui ne sont pas consécutifs dans la séquence primaire.

8. Procédé selon l'une quelconque des revendications 1 à 3, dans lequel la séquence primaire présente des intervalles entre les d'échantillon définis par un ensemble de différence cyclique avec des paramètres (M, N, A), l'ensemble de différence cyclique se composant de N nombres entiers dont les différences modulo M représentent chaque résidu non nul de 1 à (M - 1) le même nombre $\Lambda$ de fois.

9. Procédé selon la revendication 8, dans lequel $\Lambda = 1$.

10. Procédé selon la revendication 8, dans lequel $\Lambda > 1$ et comprenant l'étape consistant à écarter des échantillons de telle sorte que les K échantillons obtenus comprennent des échantillons consécutifs qui ne sont pas consécutifs dans la séquence primaire.

11. Procédé selon l'une quelconque des revendications précédentes, quand il est utilisé de manière à détecter la présence d'un signal sinusoïdal à deux fréquences d'essai ou plus.

12. Procédé selon la revendication 10, dans lequel les instants $t_{xk}$ des K échantillons obtenus utilisés pour une première des fréquences d'essai, diffèrent des instants $t_{xk}$ des K échantillons obtenus utilisés pour une seconde des fréquences d'essai.

13. Procédé selon la revendication 12, dans lequel les K échantillons obtenus utilisés pour ladite première fréquence d'essai et les K échantillons obtenus utilisés pour ladite seconde fréquence d'essai, sont tous obtenus à partir d'échantillons avec la même séquence primaire, la séquence primaire comprenant des cycles répétés et les K échantillons obtenus utilisés pour ladite première fréquence d'essai commençant à un point différent à l'intérieur d'un cycle de la séquence primaire des K échantillons obtenus utilisés pour ladite seconde fréquence d'essai.

14. Procédé selon la revendication 12, dans lequel les K échantillons obtenus utilisés pour ladite première fréquence d'essai et les K échantillons obtenus utilisés pour ladite seconde fréquence d'essai, sont obtenus à partir de différentes séquences primaires.

15. Procédé selon la revendication 11, la revendication 12 ou la revendication 14, dans lequel le nombre de K échantillons obtenus utilisés pour ladite première fréquence d'essai, diffère du nombre de K échantillons obtenus utilisés pour ladite seconde fréquence d'essai.

**16.** Procédé selon l'une quelconque des revendications précédentes, dans lequel les instants espacés de manière non uniforme $t_{xk}$ sont tels que les grandeurs $m_c$, $m_s$ des moyennes desdites ondes cosinusoïdale et sinusoïdale ne sont pas supérieures à 0,1 fois les amplitudes respectives desdites ondes cosinusoïdale et sinusoïdale.

**17.** Procédé selon la revendication 16, dans lequel les instants espacés de manière non uniforme $t_{xk}$ sont tels que la somme des carrés des grandeurs $m_c$, $m_s$ des moyennes, est inférieure ou égale à 0,01.

**18.** Procédé selon l'une quelconque des revendications précédentes, dans lequel les K échantillons obtenus sont sélectionnés à partir de la séquence primaire de façon à minimiser la somme des carrés des grandeurs $m_c$, $m_s$ des moyennes desdites ondes cosinusoïdale et sinusoïdale.

**19.** Procédé selon l'une quelconque des revendications précédentes, dans lequel les K échantillons obtenus et la fréquence $f_x$ sont sélectionnés de façon à minimiser la somme des carrés des grandeurs $m_c$, $m_s$ des moyennes desdites ondes cosinusoïdale et sinusoïdale.

**20.** Procédé selon l'une quelconque des revendications précédentes, dans lequel les coefficients $c_{xk}$ et $s_{xk}$ sont obtenus à partir de :

$$c_{xk} = cos\ (2\ \pi f_x\ t_{xk} - \phi_x)\ ;\qquad s_{xk} = sin\ (2\ \pi f_x\ t_{xk} - \phi_x)$$

et où $\phi_x$ est sélectionné de telle sorte que la moyenne des échantillons prélevés aux instants $t_{xk}$ d'une forme d'onde $sin(4\ \pi\ f_x\ t_{xk} - 2\ \phi_x)$ soit sensiblement égale à zéro.

**21.** Procédé selon la revendication 20, dans lequel la grandeur de la moyenne des échantillons de la forme d'onde $sin(4\ \pi\ f_x\ t_{xk} - 2\ \phi_x)$ n'est pas supérieure à 0,2.

**22.** Procédé selon l'une quelconque des revendications précédentes, dans lequel $\phi_x$ remplit la condition suivante :

$$\tan(2\phi_x) = \sum_{k=1}^{K} \sin(4\pi\ f_x\ t_{xk}) / \sum_{k=1}^{K} \cos(4\pi\ f_x\ t_{xk})$$

**23.** Procédé selon l'une quelconque des revendications précédentes, comprenant l'étape consistant à générer ladite séquence primaire d'échantillons.

**24.** Procédé de détection d'un objet, le procédé comprenant les étapes consistant à émettre des impulsions à des intervalles non uniformes, détecter des impulsions réfléchies par l'objet, les impulsions réfléchies constituant des échantillons modulés par un signal sinusoïdal qui présente une fréquence Doppler qui résulte d'un déplacement relatif de l'objet, et détecter le signal sinusoïdal en utilisant un procédé selon l'une quelconque des revendications précédentes.

**25.** Appareil de détection de la présence d'un signal sinusoïdal, l'appareil étant agencé de manière à fonctionner selon un procédé selon l'une quelconque des revendications 1 à 23.

**26.** Capteur Doppler agencé de manière à détecter un objet selon un procédé selon la revendication 24.

*a)*

$\Delta_0$

$T_0$

$T_F$

t

*b)*

Doppler

$1/T_F$

$c\Delta_0/2$

range

Fig. 1     PRIOR ART

Fig. 2     PRIOR ART

*a)*

$T_0$

*b)*

delayed and Doppler-shifted transmitted pulses

*c)*

*d)*

Fig. 3      PRIOR ART

Fig. 4

*a)*

*b)*

Fig. 5

*a)*

$l = 10$

*b)*

R($l$)

K = 8

1

0

M = 57

$l$

Fig. 6

Fig. 7

EP 1 903 682 B1

Fig. 8

30

Fig. 9

*Fig. 10*

Fig. 11

*Fig. 12*

Fig. 13

Fig. 14

*Fig. 15*

Fig. 16

Fig. 17

Fig. 18

Fig. 19

**EP 1 903 682 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. H. PRESS ; S. A. TEUKOLSKY ; W. T. VETTERLING ; B. P. FLANNERY.** Numerical Recipes in C. Cambridge University Press, 1992, 575-584
- **R. I. SHRAGER.** On a three-term variant of Lomb periodogram. *Astrophysics and Space Science,* 2001, vol. 277, 519-530
- **R. N. MCDONOUGH ; A. D. WHALEN.** Detection of Signals in Noise. Academic Press, 1995, 137-141
- **P. FAN ; M. DARNELL.** Sequence Design for Communications Applications. Wiley, 1996